(19) Europäisches Patentamt
European Patent Office
Office européen des brevets

(11) **EP 2 104 626 B1**

(12) **EUROPEAN PATENT SPECIFICATION**

(45) Date of publication and mention
of the grant of the patent:
**16.05.2012 Bulletin 2012/20**

(21) Application number: **08705594.3**

(22) Date of filing: **16.01.2008**

(51) Int Cl.:
***B62J 35/00*** *(2006.01)*

(86) International application number:
**PCT/US2008/000536**

(87) International publication number:
**WO 2008/088809 (24.07.2008 Gazette 2008/30)**

(54) **TWO-WHEELED VEHICLE**

ZWEIRÄDRIGES FAHRZEUG

VÉHICULE À DEUX ROUES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **17.01.2007 US 624103**
**17.01.2007 US 880909 P**
**17.01.2007 US 624142**
**17.01.2007 US 624144**

(43) Date of publication of application:
**30.09.2009 Bulletin 2009/40**

(73) Proprietor: **Polaris Industries Inc.**
**Medina, Minnesota 55340 (US)**

(72) Inventors:
• **BAGNARIOL, David, Louis**
**Shafer, MN 55074 (US)**
• **CHEVALIER, Mark, W.**
**Andover, MN 55304 (US)**
• **HANTEN, Mike**
**Delano, MN 55328-9200 (US)**
• **HOEVE, Jason, William, Beiber**
**Stacy, MN 55079 (US)**
• **HOLROYD, James, Arthur, John**
**Stillwater, MN 55082 (US)**
• **KOESTERS, Brian, K.**
**Lindstrom, MN 55045 (US)**
• **OTTERSON, Andrew**
**Prior Lake, MN 55372 (US)**
• **SONG, Michael**
**Maple Grove, MN 55311 (US)**
• **TOMOLILLO, Vittorio**
**Stillwater, MN 55082 (US)**
• **VORNDRAN, Ronald, A.**
**Osceola, WI 54020 (US)**

(74) Representative: **Reuteler, Raymond Werner**
**Reuteler & Cie SA**
**Chemin de la Vuarpillière 29**
**CH-1260 Nyon (CH)**

(56) References cited:
**DE-B- 1 118 632        FR-A- 1 111 887**
**GB-A- 191 219 436      JP-A- 59 106 380**
**US-A- 4 799 569**

**Description**

The present invention relates generally to a vehicle and in particular to a motorcycle.

Two wheel vehicles, such as motorcycles, are known. It is known to include a fuel storage tank on a motorcycle, as disclosed for example in GB19436, DE1118632, JP59106380, FR1111887, and US4799569. It is known to provide a rear suspension for a motorcycle. It is known to include devices on a motorcycle to minimize damage during a tip-over of the motorcycle.

Summary of the Invention:

The object of the present invention is to provide an alternative two-wheeled vehicle comprising a first fuel storage tank and a second fuel storage tank which balance the fuel load about the longitudinal plane of the vehicle.

The object of the invention has been achieved by the two-wheeled vehicle according to claim 1. Dependent claims describe further advantageous features of the invention.

The present disclosure relates to two wheeled vehicles, including motorcycles. The present disclosure relates to the placement of various components to move the center of gravity of a two-wheeled vehicle forward. The present disclosure relates to the configuration of fuel storage tanks of a two-wheeled vehicle. The present disclosure relates to apparatus to prevent an unwanted tip-over of a two-wheeled vehicle.

Disclosed herein is a two-wheeled vehicle comprising a front wheel; a rear wheel generally positioned in line with the front wheel along a longitudinal plane of the two-wheeled vehicle; a frame supported by the front wheel and the rear wheel; a swingarm pivotably coupled to the frame and supported by the rear wheel; a suspension system coupled to the swing arm and to the frame. The suspension system including a shock absorber and a linkage coupled to the shock absorber. The linkage moves in a plane which is transverse to the longitudinal plane of the two-wheeled vehicle.

Disclosed herein is a two-wheeled vehicle comprising a front wheel; a rear wheel generally in positioned in line with the front wheel along a longitudinal plane of the two-wheeled vehicle; a frame supported by the front wheel and the rear wheel; a swingarm pivotably coupled to the frame at a first location and supported by the rear wheel; a suspension system coupled to the frame at a second location. The second location being higher than the first location. The suspension system being further coupled to the swingarm. The two-wheeled vehicle further comprising an exhaust system coupled to the engine. The exhaust system extending rearward from the engine towards the rear wheel and passing in front of the rear wheel from a first side of the two-wheeled vehicle to a second side of the two-wheeled vehicle at a height lower than the first location.

Disclosed herein is a two-wheeled vehicle comprising a front wheel; a rear wheel generally positioned in line with the front wheel along a longitudinal plane of the two-wheeled vehicle; a frame supported by the front wheel and the rear wheel; an engine coupled to the frame and operably coupled to the rear wheel to power the rear wheel; a steering assembly coupled to the front wheel, the steering assembly being moveable to steer the front wheel; and a fuel storage tank supported by the frame and operably coupled to the engine. The steering assembly including an upper portion above a top horizontal plane of fuel storage tank and a lower portion below a bottom horizontal plane of the fuel storage tank. The lower portion being coupled to the upper portion through a middle portion, at least a portion of the middle portion being positioned rearward of a front vertical plane of the fuel storage tank.

Disclosed herein is a two-wheeled vehicle comprising a front wheel; a rear wheel generally positioned in line with the front wheel along a longitudinal plane of the two-wheeled vehicle; a frame supported by the front wheel and the rear wheel; an engine coupled to the frame and operably coupled to the rear wheel to power the rear wheel; a steering assembly coupled to the front wheel, the steering assembly being moveable to steer the front wheel; and a plurality of fuel storage tanks supported by the frame and operably coupled to the engine. A first fuel storage tank and a second fuel storage tank of the plurality of fuel storage tanks being positioned forward of the rear wheel and in a generally side-by-side configuration.

Disclosed herein is a two-wheeled vehicle comprising a front wheel; a rear wheel generally positioned in line with the front wheel along a longitudinal plane of the two-wheeled vehicle; a frame supported by the front wheel and the rear wheel; an engine coupled to the frame and operably coupled to the rear wheel to power the rear wheel, the engine being positioned between the front wheel and the rear wheel; a straddle seat supported by the frame, the straddle seat having a support surface; and a battery operably coupled to the engine. The battery located generally forward of the engine.

Disclosed herein is a two-wheeled vehicle comprising a front wheel; a rear wheel generally positioned in line with the front wheel along a longitudinal plane of the two-wheeled vehicle; a frame supported by the front wheel and the rear wheel; an engine coupled to the frame and operably coupled to the rear wheel to power the rear wheel; a straddle seat supported by the frame, the straddle seat having a support surface; a storage compartment supported by the frame and positioned proximate to the rear wheel. The storage compartment being positioned laterally outward of the rear wheel and overlapping a portion of the rear wheel from a direction normal to the longitudinal plane. The two-wheeled vehicle further comprising an at least one support member positioned to support the two-wheeled vehicle to prevent damage to an exterior of the storage compartment in the event of the two-wheeled vehicle unintentionally tipping. The at least one support member being positioned in a non-overlapping relationship with the storage compartment.

Disclosed herein is a vehicle for operation by a rider, the vehicle comprising a plurality of ground engaging members; a frame supported by the plurality of ground engaging members; a straddle seat supported by the frame; a component supported by the plurality of ground engaging members; a first member supported by the frame; a second member supported by the frame, the second member being moveable relative to the first member; and a foot actuable control lever coupled to the second member. The foot actuable control lever being operatively coupled to the component to provide an input to the component. An initial position of the foot actuable control lever is set based on the position of the second member relative to the first member. The initial position being selected based on the rider.

Disclosed herein is a method of adjusting the position of a foot peg of a foot actuable control lever of a vehicle is provided. The method comprising the steps of providing a mount and a support, the mount being translatable relative to the support; coupling the foot actuable control lever of the vehicle to the mount; translating the mount relative to the support to position the foot peg; and securing the mount and the support together.

Disclosed herein is a method of controlling a moveable windshield of a vehicle having a frame and a plurality of ground engaging members is provided. The method comprising the steps of supporting the moveable windshield on the frame of the vehicle; and encountering a flow of air. A first portion of the flow of air traveling along a front surface of the moveable windshield. A second portion of the flow of air traveling along a back surface of the moveable windshield. The second portion of the flow of air along the back surface of the moveable windshield being increased when the moveable windshield is in a raised position than when the moveable windshield is in a lowered position.

Disclosed herein is a windshield assembly, the windshield assembly comprising a base member; a rear windshield supported by the base member; and a front windshield supported by the base member. The front windshield being positioned forward of the rear windshield. The front windshield being moveable relative to the rear windshield between a lowered position and a raised position. The windshield assembly further comprising an actuation device supported by the base member and operatively coupled to the front windshield. The actuation device controlling the movement of the front windshield between the raised position and the lowered position. The front windshield being spaced apart from the rear windshield to provide a flow of air along a back surface of the front windshield.

Disclosed herein is a vehicle for operation by a rider, the vehicle comprising a plurality of ground engaging members including a front ground engaging member and a rear ground engaging member; a frame supported by the plurality of ground engaging members; a straddle seat supported by the frame; a steering assembly coupled to the front ground engaging member, the steering assembly being moveable to steer the front and a rear ground engaging member; a frame supported by the plurality of ground engaging members; a straddle seat supported by the frame; a steering assembly coupled to the front ground engaging member, the steering assembly being moveable to steer the front ground engaging member; and a windshield positioned forward of the straddle seat. The windshield including a front windshield portion and a rear windshield portion. The front windshield portion being moveable relative to the rear windshield portion between a raised position and a lowered position. A flow of air passes between the front windshield portion and the rear windshield portion along a back surface of the front windshield portion. The flow of air being increased when the front windshield portion is in the raised position.

Brief Description of Drawings

The above mentioned and other features of this invention, and the manner of attaining them, will become more apparent and the invention itself will be better understood by reference to the following description of embodiments of the invention taken in conjunction with the accompanying drawings, where:

Fig. 1 is a side view of an illustrative embodiment of a two-wheeled vehicle;

Fig. 2 is an perspective view of the two-wheeled vehicle of Fig. 1;

Fig. 3 is a front view of the two-wheeled vehicle of Fig. 1;

Fig. 4 is a top view of the two-wheeled vehicle of Fig. 1;

Fig. 5 is an perspective view of a rear swingarm and a chassis of the two-wheeled vehicle of Fig. 1, the chassis including a front frame member and a rear frame member;

Fig. 6 is a sectional view of the front frame member of the chassis of Fig. 5;

Fig. 7 is an perspective view of the front frame member of Fig. 6 with an air filter, mounting bracket, an electronic module, and a harness management member coupled thereto;

Fig. 8 is a perspective view of the steering assembly of the two-wheeled vehicle of Fig. 1;

Fig. 9 illustrates the placement of a fuel storage tank relative to the steering assembly of Fig. 8;

Fig. 10 is a perspective view of two fuel storage tanks of the two-wheeled vehicle of Fig. 1;

Fig. 11 is a top of the two fuel storage tanks of Fig. 10;

Fig. 12 is a perspective view of the two fuel storage tanks of Fig. 10 located relative to the steering assembly of Fig. 8 and the front frame member of Fig. 5;

Fig. 13 is a perspective view of a rear suspension coupled to the rear frame member and the rear swingarm of Fig. 5, the rear swingarm being further coupled to a rear wheel;

Fig. 13A is an exploded view of portions of the rear bodywork illustrating the location that the air line coupled to the rear suspension of Fig. 13 is accessible;

Fig. 14 is a view of the assembly of Fig. 13 with the rear frame member being shown in phantom to illustrate the rear suspension;

Fig. 15 is a front perspective view with the rear frame member shown in section to illustrate the rear suspension;

Fig. 16A is a side view of the assembly of Fig. 13 with the rear suspension being in an extended state;

Fig. 16B illustrates the rear suspension in the extended state corresponding to Fig. 16A;

Fig. 17A is a side view of the assembly of Fig. 13 with the rear suspension being in a mid-travel state;

Fig. 17B illustrates the rear suspension in the mid-travel state corresponding to Fig. 17A;

Fig. 18A is a side view of the assembly of Fig. 13 with the rear suspension being in a compressed state;

Fig. 18B illustrates the rear suspension in the compressed state corresponding to Fig. 18A;

Fig. 19 illustrates an exemplary motion ratio for the rear suspension of Fig. 13;

Fig 20 is a perspective view of an exhaust system of the two-wheeled vehicle of Fig. 1;

Fig. 21 is a side view of the assembly of Fig. 13 and illustrates the cross-over location of the exhaust system of Fig. 20;

Fig. 22 is a perspective view of the assembly of Fig. 13 and a rear tip-over apparatus;

Fig. 23 is a perspective exploded assembly view of the rear tip-over apparatus of Fig. 22; and

Fig. 24 is a rear view of the assembly of Fig. 13 including a left-side rear tip over apparatus and a right side rear tip-over apparatus.

Fig. 25 is an exploded view of an exemplary adjustable foot control assembly;

Fig. 26 is a side assembled view of the exemplary adjustable foot control assembly of Fig. 25;

Fig. 27A is a representation of air flow relative to a prior art windshield;

Fig. 27B is a representation of air flow relative to a windshield of the vehicle of Fig. 1;

Fig. 28 is a sectional view of an exemplary windshield;

Fig. 29 is an exploded, assembly view of the windshield of Fig. 28;

Fig. 30 is a rear, assembly view of the windshield of Fig. 29;

Fig. 31 is a diagrammatic view of a scissor mechanism for the windshield of Fig. 28;

Corresponding reference characters indicate corresponding parts throughout the several views. Unless stated otherwise the drawings are proportional.

The embodiments disclosed below are not intended to be exhaustive or to limit the invention to the precise forms disclosed in the following detailed description. Rather, the embodiments are chosen and described so that others skilled in the art may utilize their teachings. While the present invention primarily involves a touring motorcycle, it should be understood, that the invention may have application to other types of vehicles such as all-terrain vehicles, motorcycles, watercraft, utility vehicles, scooters, golf carts, and mopeds.

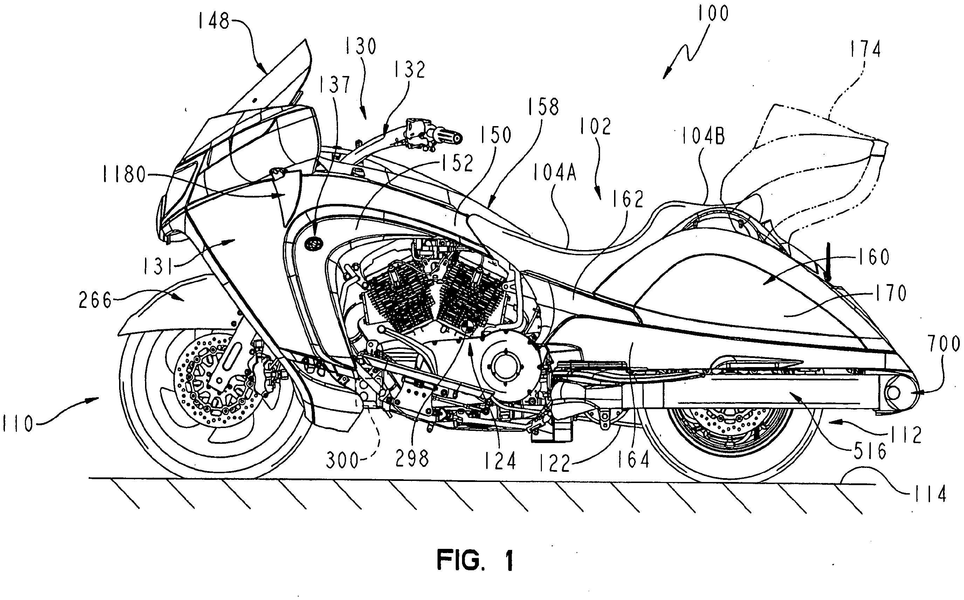

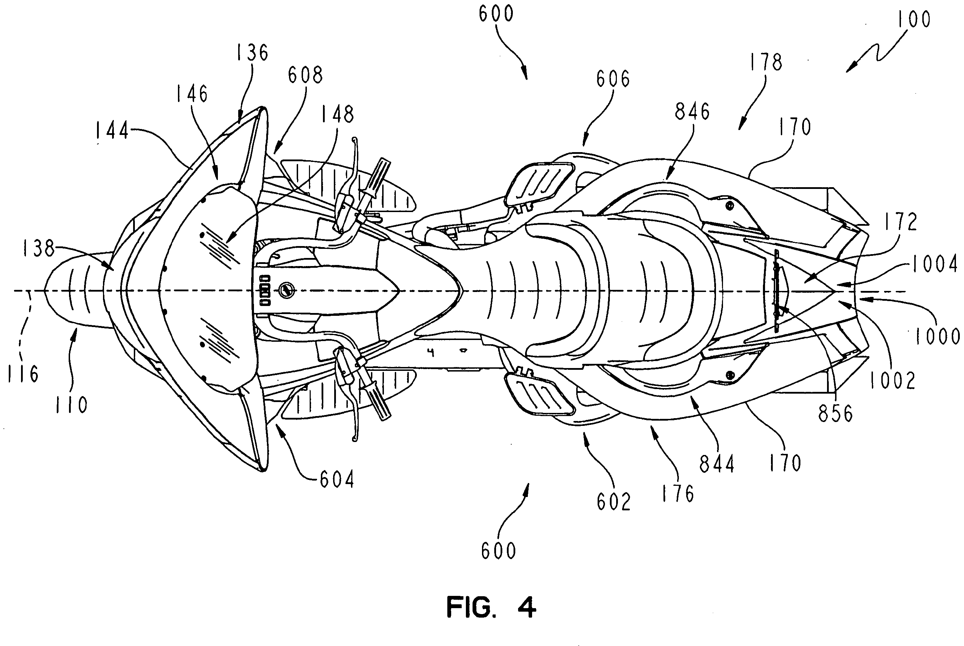

Referring to Fig. 1, an illustrative embodiment of a two-wheeled vehicle 100 is shown. Vehicle 100 as illustrated is a touring motorcycle including a seat 102 for supporting an operator in position 104A and a passenger in position 104B. Vehicle 100 further includes a front ground engaging member, illustratively wheel 110, and a rear ground engaging member, illustratively wheel 112. Vehicle 100 travels relative to the ground 114 on front wheel 110 and rear wheel 112. In one embodiment, front wheel 110 and rear wheel 112 are generally arranged along a centerline plane 116 (see Fig. 4) of vehicle 100.

Rear wheel 112 is coupled to a drive shaft of a transmission through a belt 122. Transmission is coupled to engine 124 which provides power to rear wheel 112. In the illustrated embodiment, engine 124 is a 100 cubic inch 4-stroke 50° v-twin spark-ignition gasoline engine available from Polaris Industries Inc. located at 2100 Highway 55 in Medina, MN 55340. In one embodiment, engine 124 has a maximum width of about 380 millimeters or approximately 15 inches which allows flexibility and comfort for the position of the operator's legs. In alternative embodiments, rear wheel 104 is coupled to the drive shaft through a chain drive or other suitable couplings. The drive arrangement in the illustrated embodiment is comprised of a six speed overdrive constant mesh transmission with a carbon fiber reinforced belt available from Polaris Industries, Inc. In alternative embodiments, the transmission is a continuous variable transmission.

It will be appreciated that while the vehicle 100 is illustrated as a two-wheel vehicle, various embodiments of the present teachings are also operable with three, four, six etc. wheeled vehicles. It will also be appreciated that while a spark-ignition gasoline engine is illustrated, electric motors, and other suitable torque-generating machines are operable with various embodiments of the present teachings.

Front wheel 110 is coupled to a steering assembly 130. Steering assembly 130 includes handlebars 132 which may be moved by an operator to rotate front wheel 110 either to the left or the right.

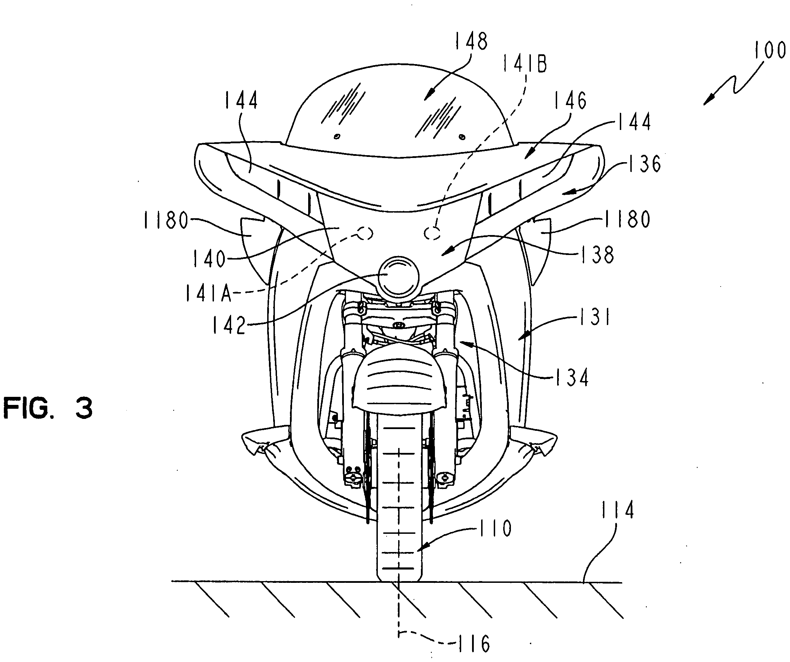

Engine 124 is framed by various bodywork components. A front portion of vehicle 100 includes a front fairing 131 having a central opening 134 (see Fig. 3). Steering assembly 130 extends through central opening 134. Front fairing 131 is stationary and does not move left or right with steering assembly 130.

Referring to Fig. 3, a front panel 136 is provided which frames the front light assembly 138 including a front driving light assembly 140, a high beam light 142, and turn lights 144. Front panel 136 further includes an access panel 146 above which windshield 148 extends.

Returning to Fig. 1, front fairing 131 includes a side panel 150 which extends from in front of a lower portion of engine 124 up above engine 124 and over engine 124 back to seat 102. A second panel 152 follows the general line of side panel 150 and is set inward of side panel 150. Additionally, a top bodywork grouping 158 covers a top portion of vehicle 100 generally forward of seat 102.

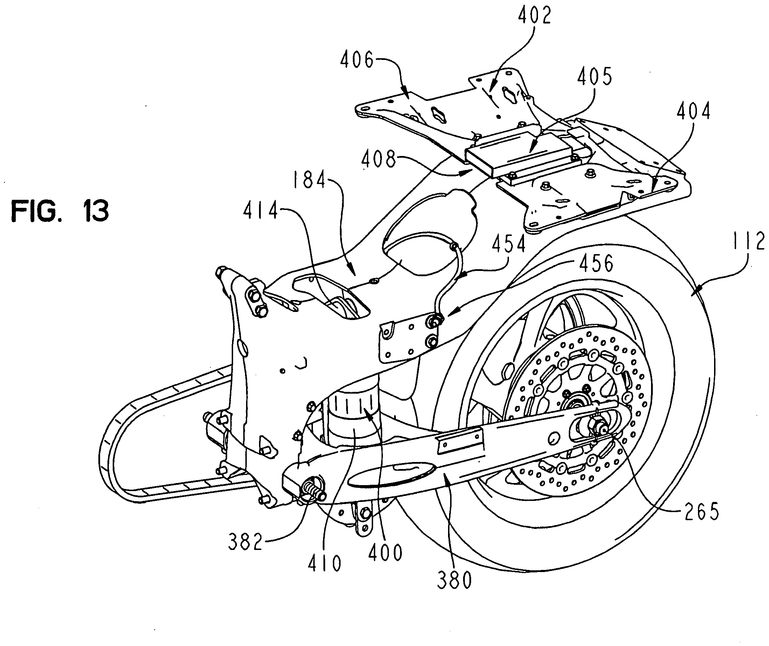

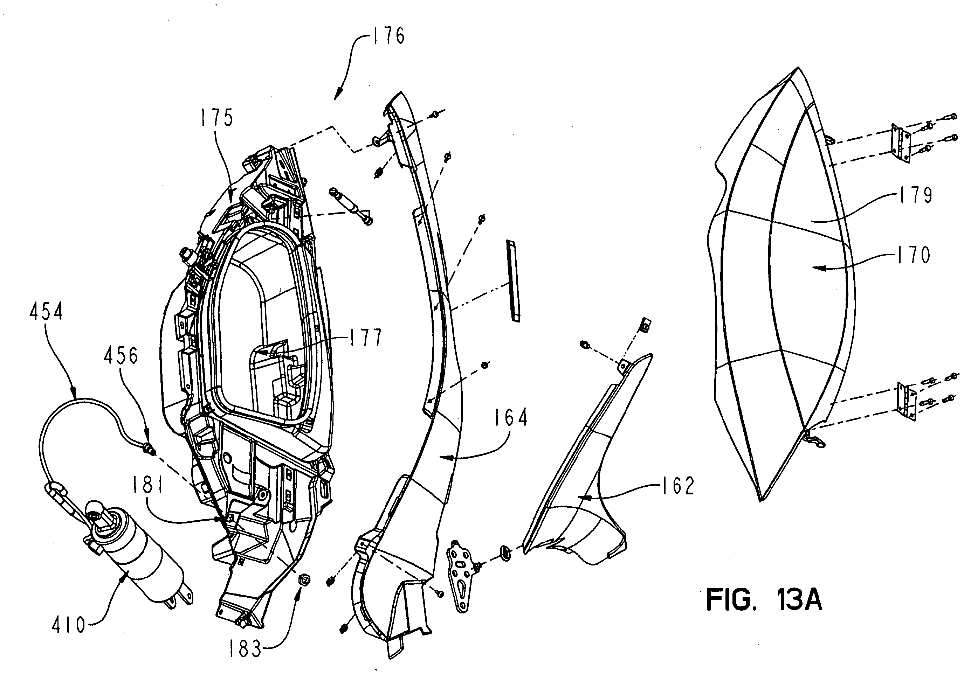

A rear portion of vehicle 100 includes a rear bodywork grouping 160. Rear bodywork grouping 160 includes side panels 162 and 164. Further, rear bodywork grouping 160 includes an exterior of saddlebags 170, a rear panel 172 (see Fig. 4), and a removable trunk 174. Referring to Fig. 4, vehicle 100 includes a left side saddlebag 176 and a right side saddlebag 178. Saddlebags 176, 178 and trunk 174 are each storage compartments supported by the frame and positioned proximate to the rear wheel. As shown in Fig. 13A, saddlebag includes a base member 175 which includes a storage compartment 177. Storage compartment 177 is covered by a saddlebag cover 179 which is movable between an opened position and a closed position. Saddlebags 176, 178 are positioned laterally outward of the rear wheel and overlapping a portion of the rear wheel from a direction normal to the longitudinal plane 116. Trunk 174 is positioned above the support surface of the straddle seat 102.

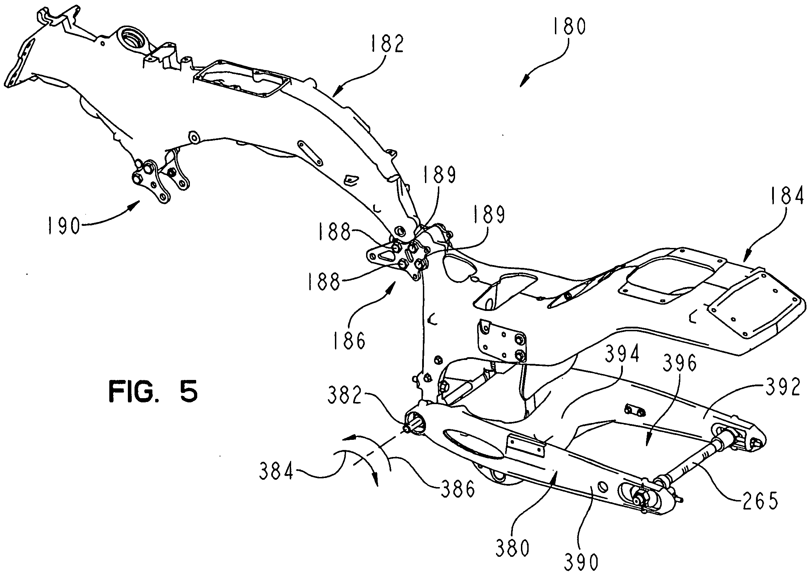

Turning to Fig. 5, vehicle 100 includes a chassis 180. Chassis 180 includes a front frame member 182 and a rear frame member 184. In one embodiment, both front frame member 182 and rear frame member 184 are cast one-piece components. In one example, the front frame member 182 and the rear frame member 184 are cast aluminum. By casting front frame member 182 and rear frame member 184, variances in component attachment points from instance to instance of a given chassis is reduced compared to traditional tubular frames. In one embodiment, component attachment points are machined to achieve improved tolerancing. In addition, the torsional stiffness of vehicle 100 is generally about twice as stiff as a tubular frame vehicle.

Front frame member 182 and rear frame member 184 are coupled together. In the illustrated embodiment, both front frame member 182 and rear frame member 184 are coupled to mounting brackets 186, front frame member 182 through couplers 188 and rear frame member through couplers 189. Mounting brackets 186 along with mounting brackets 190 couple to engine 124 such that engine 124 is suspended from front frame member 182.

By having front frame 182 and rear frame 184 as separate components coupled together, either front frame 182 or rear frame 184 may be used on another type of two-wheeled vehicle thereby reducing design cycles and part cost.

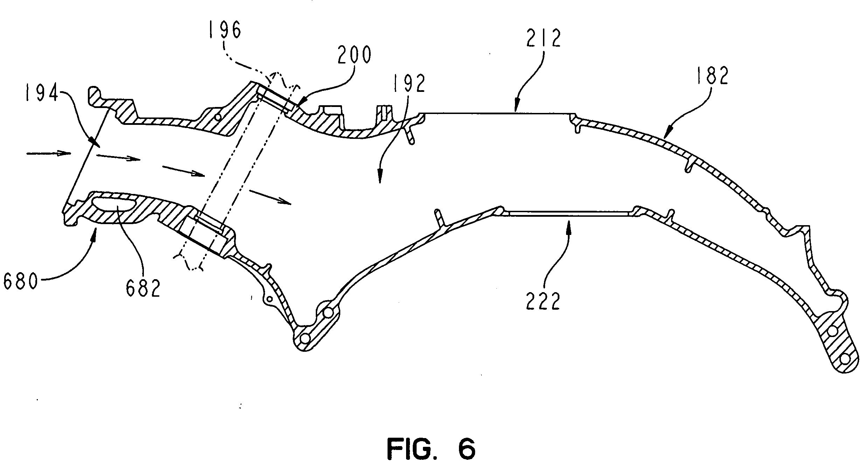

Front frame member 182 includes an air channel 192 within as shown in Fig. 6. Front frame member 182 serves as an air box for vehicle 100. Referring to Fig. 6, air enters an air inlet 194 located in the front of front frame member 182, passes around a steering column 196 of steering assembly 130, and exits through an air outlet 222 of front frame member 182. The air outlet 222 is in fluid communication with engine 124 and communicates air to engine 124. The steering column 196 of steering assembly 130 passes through a fork journal 200 of front frame member 182. Sealed bearings are pressed into a top portion 197 and a bottom portion 199 of fork journal 200 and facilitate the rotation of steering column 196 relative to front frame member 182.

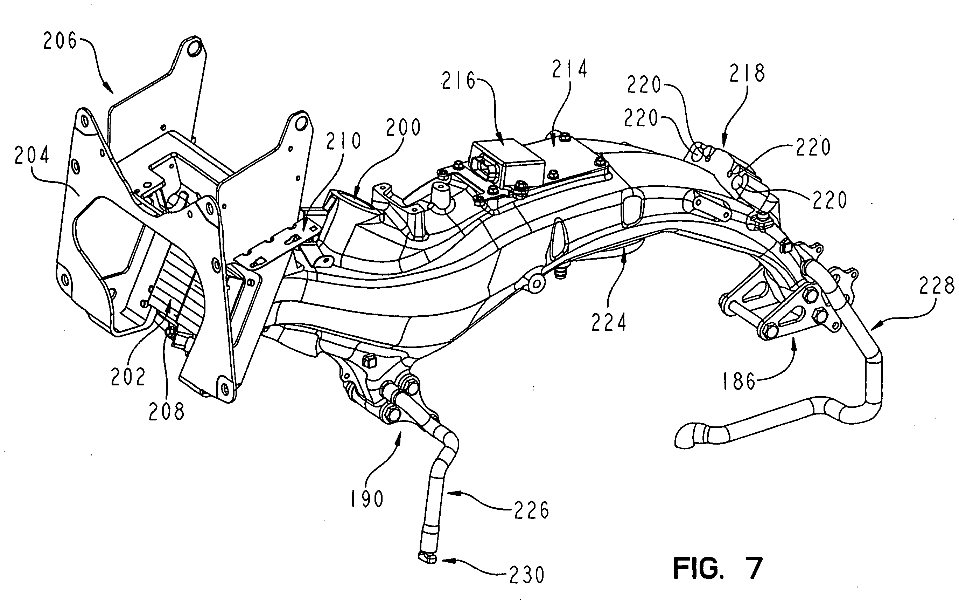

Referring to Fig. 7, an air filter 202 is positioned over air inlet 194 so that air passes through air filter 202 and into the interior 192 of front frame member 182 on its way to engine 124. Referring to Fig. 3, air enters opening 134 between front wheel 110 and fairing 131. This results in introducing cool air into the air box and ultimately into engine 124.

Air filter 202 is located behind the headlight assembly 138 (see Fig. 3) which mounts to a front portion 204 of a mounting bracket 206 coupled to front frame member 182. By placing air filter 202 up front, air filter 202 is easily accessible for servicing. In the illustrated embodiment, air filter 202 is held in place through two couplers 208 (one shown), illustratively fasteners. To replace air filter 202 couplers 208 are removed and air filter 202 may slide down out of place. Once removed from air inlet 194 a replacement air filter 202 may be installed by re-securing couplers 208.

Mounting bracket 206 along with supporting light assembly 138, supports many other components including front panel 136, access panel 146, windshield 148, and additional components including an instrument panel and rear view mirrors. In addition, mounting bracket 206 has coupled thereto a mounting bracket 210 to which a fuse box (not shown) may be coupled. A similar mounting bracket is positioned on the left side of mounting bracket 206 to mount a similar fuse box. By locating the fuse box proximate to mounting bracket 206, an operator may easily replace a fuse by removing access panel 146 to gain access to the fuse box.

An upper access opening 212 (see Fig. 6) of front frame member 182 is covered with a cover 214 secured with multiple fasteners. Cover 214 also supports an electronic module 216 which interfaces with the turn signals to act as an auto cancellation module in case the turn signals are inadvertently left on. Harnesses extending rearward from electronic module 216 and/or additional components are organized by harness management member 218 having a plurality of channels 220 to maintain various harnesses in a spaced apart arrangement.

Air outlet 222 (see Fig. 6) of front frame member 182 is connected with a seal 224 that is in fluid communication with engine 124 and communicates air to engine 124. Also, in fluid communication with interior 192 of front frame member 182 is a drain hose 226 coupled to a front port of front frame member 182 and a crankcase breather hose 228 coupled to a rear port of front frame member 182. Drain hose 226 is capped with a drain plug 230. Drain hose 226 is used to drain any fluids that may have accumulated within the air box. Crankcase breather hose 228 is used to reduce pressure building up in the crankcase by transferring gases, such as oil vapor and/or hydrocarbons, back to the intake system.

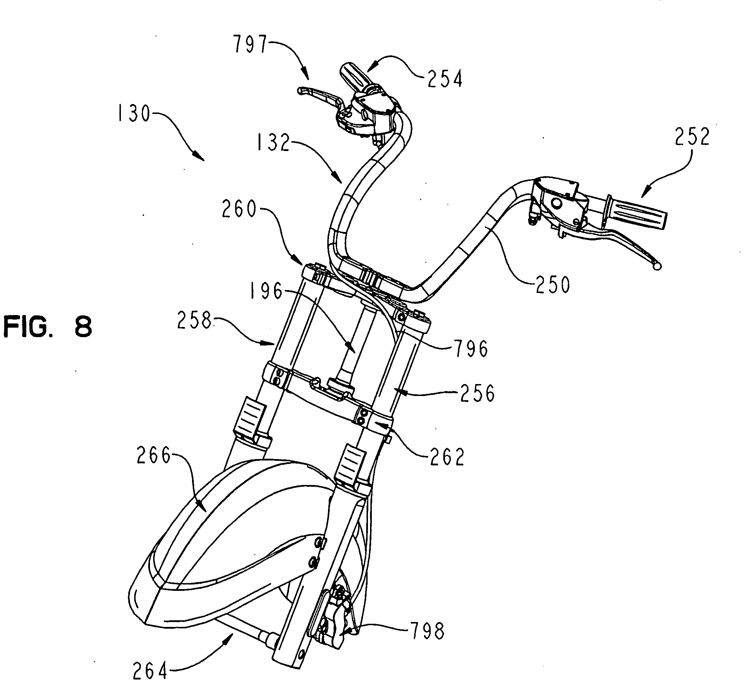

Referring to Fig. 8, steering assembly 130 is shown. Steering assembly 130 includes handlebars 132 which include a handlebar member 250 and a left and right grip 252, 254. As is known in the art, each of left grip 252 and right grip 254 may be configured to control and/or have associated therewith one or more components to control engine 124, the transmission and/or the front and/or rear brakes of two-wheeled vehicle 100. As shown in Fig. 8, handlebars 132 are coupled to center steering column 196 and left and right steering columns 256, 258 through an upper bracket 260.

Center steering column 196 passes through fork journal 200 in front frame member 182. Left and right steering columns 256, 258 are positioned to a left side and a right side of front frame member 182, respectively. As used herein, the left side corresponds to a left side of an operator straddling seat 102 facing forward and the right side corresponds to a right side of an operator straddling seat 102 facing forward.

A lower bracket 262 also couples center steering column 196 and left and right steering columns 256, 258 together. Upper bracket 260 is positioned above front frame member 182 and lower bracket 262 is positioned below front frame member 182. Left and right steering columns 256, 258 are coupled to front wheel 110 through an axle 264. Further, a fender 266 is coupled to left and right steering columns 256, 258 and positioned over front wheel 110.

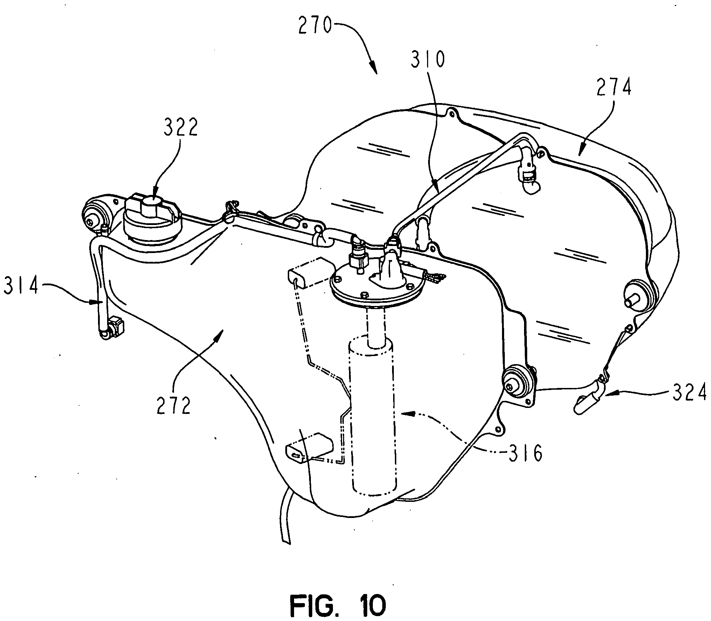

In one embodiment, a portion of steering assembly 130 is positioned rearward of a forward portion of at least one fuel storage tank (fuel storage tank 272 illustrated) of two-wheeled vehicle 100. Referring to Fig. 10, in one embodiment, two-wheeled vehicle 100 includes a fuel storage system 270 which includes two fuel storage tanks, fuel storage tank 272 and fuel storage tank 274. Additional details about fuel storage system 270 are provided herein.

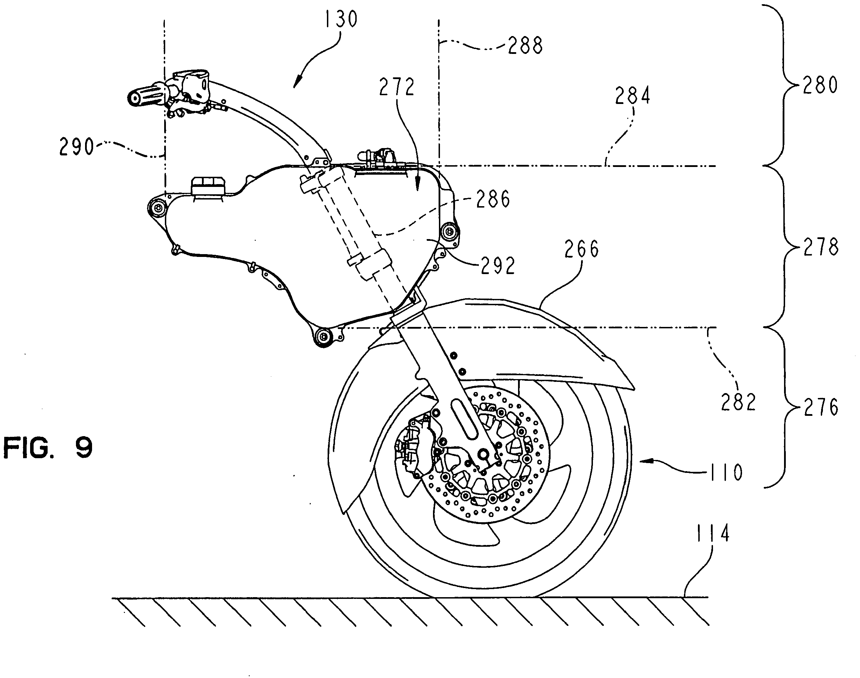

Returning to Fig. 9, a portion of steering assembly 130 is positioned rearward of a forward portion of fuel storage tank 272 of fuel storage system 270. Steering assembly 130 may be divided into three portions, a bottom portion 276, a middle portion 278, and a top portion 280. Bottom portion 276 of steering assembly 130 is the portion of steering assembly 130 which extends below a bottom plane 282 of fuel storage tank 272. Bottom plane 282 of the fuel storage tank is a horizontal plane passing through the lowermost point of fuel storage tank 272. Top portion 280 of steering assembly 130 is the portion of steering assembly 130 which extends above a top plane 284 of fuel storage tank 272. Top plane 284 of fuel storage tank 272 is a horizontal plane passing through the uppermost point of fuel storage tank 272. Middle portion 278 of steering assembly 130 is the portion of steering assembly 130 which is between bottom plane 282 of fuel storage tank 272 and top plane 284 of fuel storage tank 272.

As illustrated in Fig. 9, bottom portion 276 of steering assembly 130 is coupled to top portion 280 of steering assembly 130 through middle portion 278. Middle portion 278 has at least a portion 286 thereof which is positioned rearward of a front plane 288 of fuel storage tank 272. Further, portion 286 of middle portion 278 is positioned forward of a rear plane 290 of fuel storage tank 272. Rear plane 290 of fuel storage tank 272 being a vertical plane passing through the rear-most point of fuel storage tank 272. In the illustrated embodiment, the connection between handlebars 132 and upper bracket 260 is located rearward of front plane 288 and below top plane 284.

By having fuel storage tank 272 positioned such that at least a portion 292 thereof is forward of portion 286 of middle portion 278 of steering assembly 130 assists in moving a center of gravity 298 (see Fig. 1) of two-wheeled vehicle 100 forward. For touring motorcycles, such as the illustrated embodiment of two-wheeled vehicle 100, a large portion of the load of the motorcycle is generally positioned over rear wheel 112. For example, the load of the operator and/or passenger is generally carried by the rear wheel 112. Further, any cargo positioned within saddlebags 176, 178 and/or removable trunk 174 (shown in phantom in Fig. 1) is generally carried by the rear wheel 112. By moving more of the load forward, vehicle 100 has increased cargo carrying capability and better stability when an operator holds vehicle 100 upright while stopped.

Referring to Fig. 1, additional steps have been taken with regard to vehicle 100 to lower center of gravity 298 of two-wheeled vehicle 100 and to move center of gravity 298 towards front wheel 110. As one example, of shifting center of gravity 298 forward and lower, a battery of vehicle 100 whose location 300 is shown in phantom in Fig. 1 is located in front of engine 124 behind front wheel 110. The battery is used to provide power for the electrical start of vehicle 100 to start vehicle 100 and/or power various accessories or lights of vehicle 100 while engine 124 is not running.

Location 300 of the battery also provides for easy access to the battery. Battery cables may be attached to the battery without removing any of the body panels of vehicle 100 or removing seat 102 of vehicle 100. As such, the battery may be charged or jumped without the removal of seat 102 or any of the body panels.

In one embodiment, center of gravity 298 is about 487 mm (about 19.17 inches) above ground 114 and about 3% forward of a midpoint of a line connecting front axle 264 of front wheel 110 and a rear axle 265 (see Fig. 5) of rear wheel 112 when vehicle 100 is full of fluids without taking into account the weight of the trunk 174, the weight of any cargo, or the weight of the operator or passenger. Thus, the load between front wheel 110 and rear wheel 112 is generally balanced.

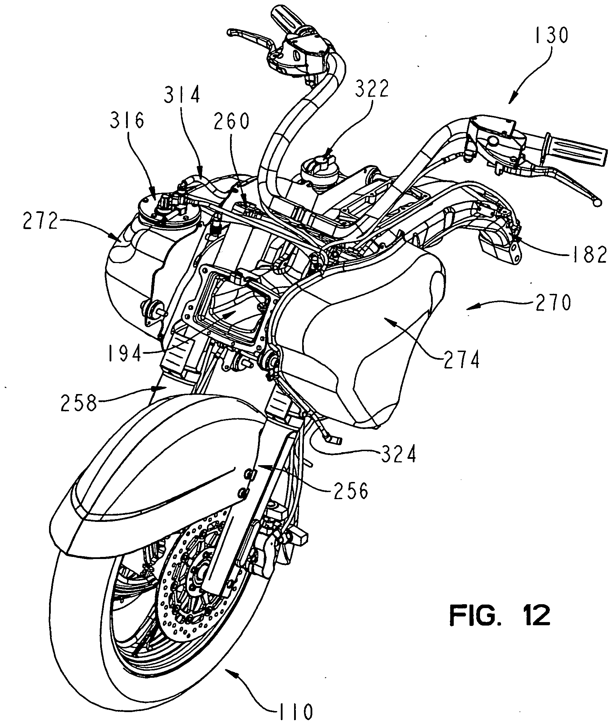

Referring to Fig. 12, the fuel storage system 270 of vehicle 100 is shifted forward compared to traditional motorcycles which further assists in balancing the load between front wheel 110 and rear wheel 112. As shown in Fig. 12, right fuel storage tank 272 is positioned on a right side of front frame member 182 and outward of front frame member 182 and left fuel storage tank 274 is positioned on a left side of front frame member 182 and outward of front frame member 182. Right fuel storage tank 272 and left fuel storage tank 274 are supported by front frame member 182 and are positioned around the air channel 192 within front frame member 182. In one embodiment, right side fuel storage tank 272 and left side fuel storage tank 274 are positioned to balance the fuel load of vehicle 100 about centerline plane 116. Steering assembly 130 is positioned between right side fuel storage tank 272 and left side fuel storage tank 274. In one embodiment, at least a portion of one or both of right fuel storage tank and left fuel storage tank overlaps at least one of a top portion of front frame member 182 and a bottom portion of front frame member 182.

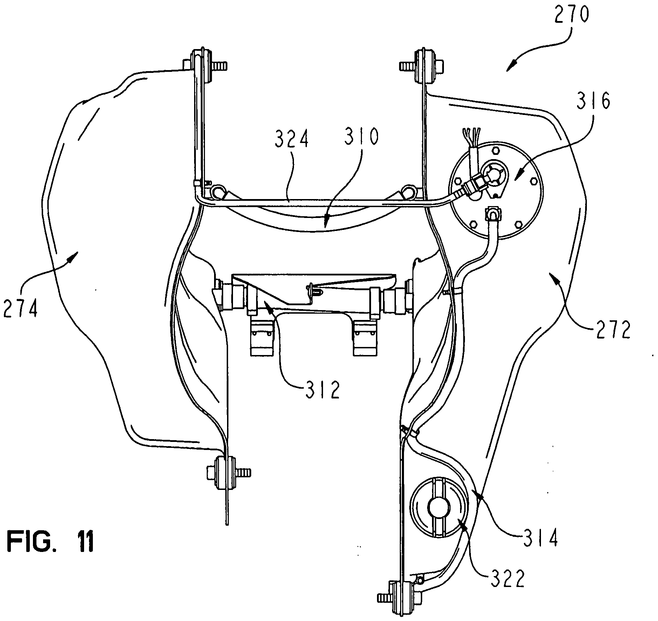

Referring to Figs. 10 and 11, right side fuel storage tank 272 and left side fuel storage tank 274 are in fluid communication with each other through an upper fluid conduit 310 and a lower fluid conduit 312. Fuel is provided from fuel storage system 270 through a fuel line 314 to engine 124. Fuel line 314 is connected to a fuel pump 316 located in right side fuel storage tank 272. Fuel pump 316 pumps fuel from the interior of right side fuel storage tank 272 through fuel line 314 to engine 124. In one embodiment, fuel pump 316 has an integrated roll-over valve built into it as a safety precaution. Also connected to fuel pump 316 is a vent line 324 which is coupled to canister (not shown) filled with filter-activated charcoal.

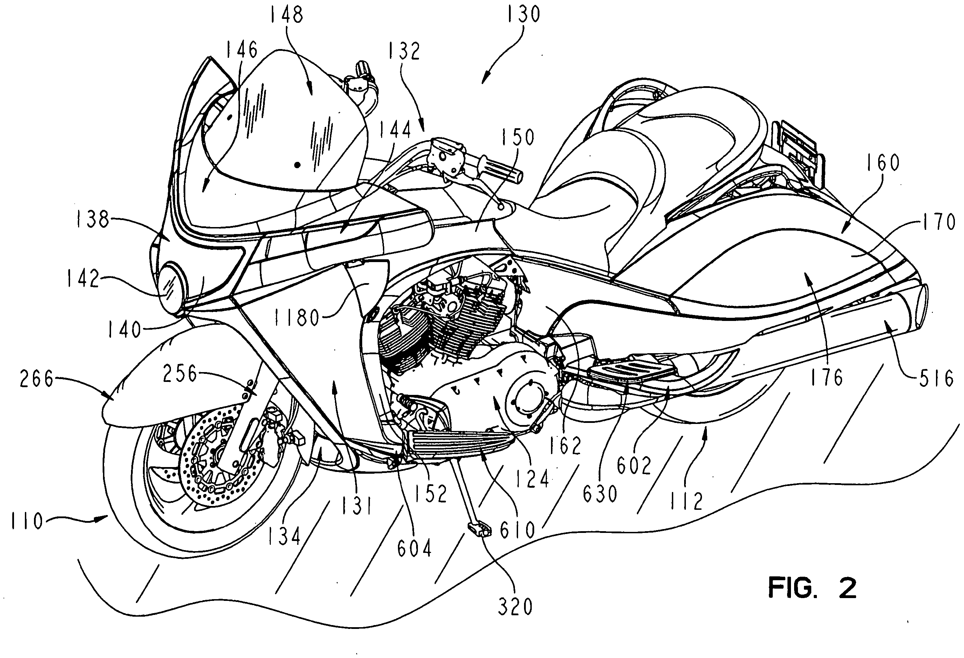

As shown in Fig. 2, vehicle 100 includes a side stand 320. Vehicle 100, like many motorcycles, is supported by front wheel 110, rear wheel 112, and side stand 320 when an operator is not positioned on vehicle 100. One of example of when this is likely the case is when an operator is introducing fuel into fuel storage system 270. To introduce fuel into fuel storage system 270, a gas cap 322 is removed from right side fuel storage tank 272. Gas is then introduced into right side fuel storage tank 272. In one embodiment, storage tank 272 includes a filler neck (not shown) that extends down into tank 272 from gas cap 322 which controls the amount of fuel that may be put in tank 272 and tank 274. Fuel in right side fuel storage tank 272 travels through line 312 into left side fuel storage tank 274 due to the leaning of vehicle 100 to the left side because vehicle 100 is supported on side stand 320. Line 310 connects the airspace above the fuel in left side fuel storage tank 274 and right side fuel storage tank 272. As fuel travels from right side fuel storage tank 272 into left side fuel storage tank 274 air is displaced through line 310 from left side fuel storage tank 274 into right side fuel storage tank 272.

In one embodiment, gas cap 322 includes a vapor and pressure release valve. The vapor and pressure release valve prevents the presence of unwanted pressure fluctuations being present in fuel storage tanks 272, 274. For example, if line 324 gets pinched and the fuel pump 316 continues to pump fuel out of tank 272, tank 272 may implode unless air is permitted to enter tank 272 through the vapor and pressure release valve of gas cap 322.

Returning to Fig. 5, a swing arm 380 is rotatably coupled to rear frame member 184 through a pivot shaft 382. Swing arm 380 may rotate downward in direction 384 away from rear frame member 184 and upward in direction 386 toward rear frame member 184. Swing arm 380 includes a left arm 390, a right arm 392 and a middle portion 394. Rear wheel 112 is received in the area 396 between left arm 390 and right arm 392 and rearward of middle portion 394. In one embodiment, swing arm 380 is a one-piece casting. In one example, swing arm 380 is cast through a lost core process.

As explained herein, a rear suspension 400 is coupled to swing arm 380 through middle portion 394. Referring to Figs. 13-15, rear suspension 400 is shown. Referring to Fig. 13, rear frame member 184 and swing arm 380 are shown assembled. Further, rear wheel 112 is shown assembled to swing arm 380. In one embodiment, rear axle 265 is coupled to swing arm 380 with a clip.

Further, a support bracket 402 is shown attached to rear frame member 184. Support bracket 402 supports saddlebags 176 and 178 and other components of the rear body of two-wheeled vehicle 100. Saddlebag 176 is supported by a left portion 404 of support bracket 402 and saddlebag 178 is supported by a right portion 406 of support bracket 402. Support bracket 402 also serves as a heat sink for the electronic control module ("ECM") 405 of vehicle 100 which is supported by a middle portion 408 of support bracket 402.

As shown in the Fig. 13, rear frame member 184 and swing arm 380 are rotatably coupled through a first connection, pivot shaft 382. A second connection is made between rear frame member 184 and swing arm 380 through rear suspension 400. In one embodiment, swing arm 380 and rear suspension are coupled to the frame in less than three locations. In one embodiment, swing arm 380 and rear suspension are coupled to the frame in two locations.

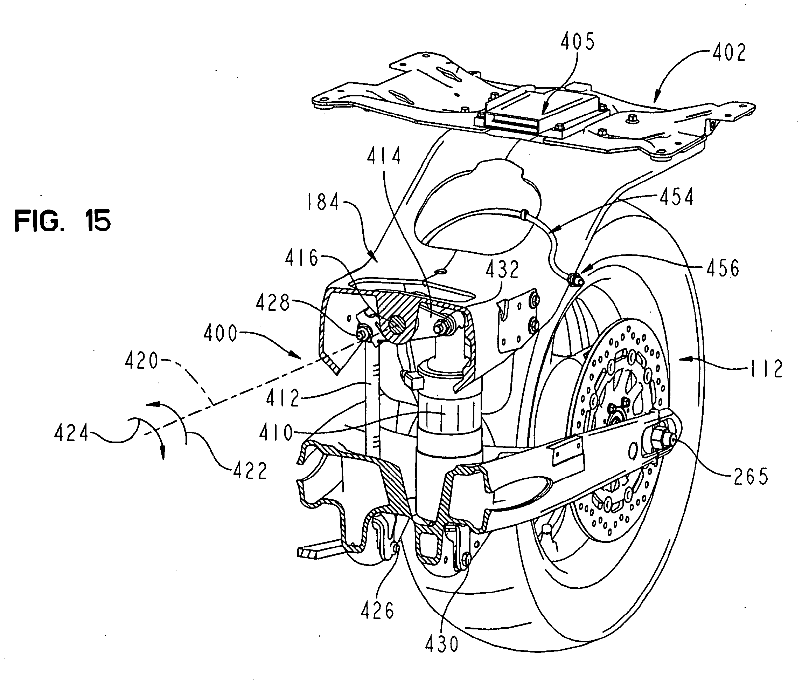

Referring to Fig. 15, rear suspension 400 includes a shock absorber 410, a pushrod 412, and a connecting link 414. The linkage of pushrod 412 and connecting link 414 scale the movement of the shock absorber 410 by a multiplication factor to correlate to the movement of swing arm 380.

As shown in Fig. 15, connecting link 414 is rotatably connected to rear frame member 184 through a pivot pin 416 and associated bearing and rotatable about a horizontal axis 420 in directions 422, 424. Pushrod 412 is rotatably coupled to swing arm 380 through a coupler 426 received in a rubber bushing and is rotatably coupled to connecting link 414 through a coupler 428. In one embodiment, coupler 428 is a spherical bearing along with a bolt and nut. Shock absorber 410 is rotatably coupled to swing arm 380 through a coupler 430 received in a rubber bushing and is rotatably coupled to connecting link 414 through a coupler 432. In one embodiment, coupler 432 is a spherical bearing along with a bolt and nut. Shock absorber 410 has shown in Fig. 15 is coupled to swing arm 380 and rear frame member 184 in a generally vertical orientation. In one embodiment, shock absorber 410 is an air shock available from KYB America LLC located at 140 N. Mitchell Court, Addison, Illinois 60101.

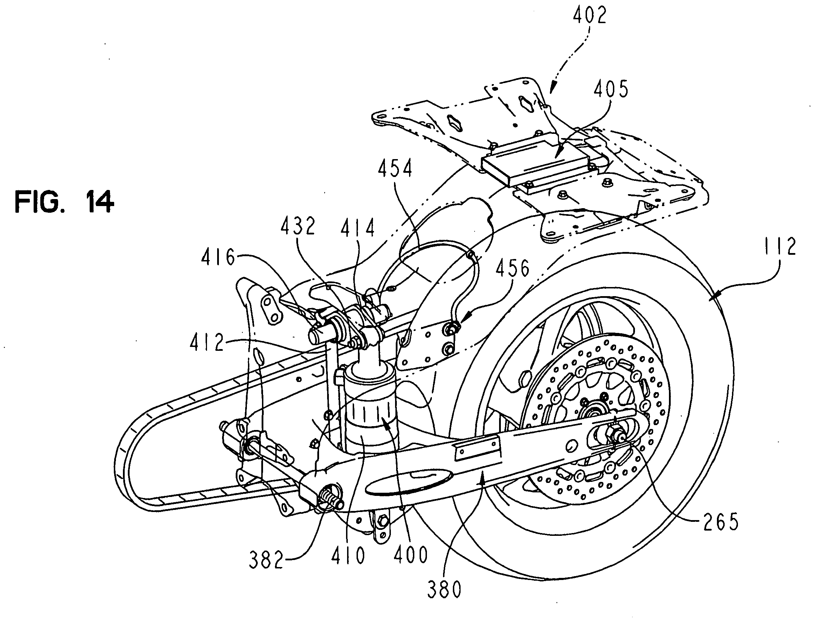

In one embodiment, shock absorber 410 is an air adjustable shock. Referring to Fig. 14, shock absorber 410 has a suspension adjuster coupled thereto, illustratively air line 454. The amount of air in shock absorber 410 may be adjusted upward or downward by adding air to shock absorber 410 or removing air from shock absorber 410, respectively. In one embodiment, an air inlet valve 456 is accessible from within rear bodywork 160. An operator may couple air inlet valve 456 to a standard air compressor to adjust the amount of air in shock absorber 410. By being capable to adjust the amount of air in air shock 410, an operator may adjust the ride height of vehicle 100 for the amount of cargo weight being carried.

Referring to Fig. 13A, air inlet valve 456 extends through an opening 181 in a saddlebag base member 175 and is secured to saddlebag base member 175 with a retainer 183, illustratively a nut. Saddlebag base member is coupled to support bracket 402 and rear frame member 184. The location of opening 181 is covered by saddlebag cover 179, when saddlebag cover 179 is in a closed position, such as shown in Fig. 1. As such, an operator would open saddlebag cover 179 to access air inlet valve 456 which extends through opening 181. By having opening 181 in a spaced apart location from storage compartment 177, an operator does not need to disturb and/or remove any cargo to access air inlet line 456.

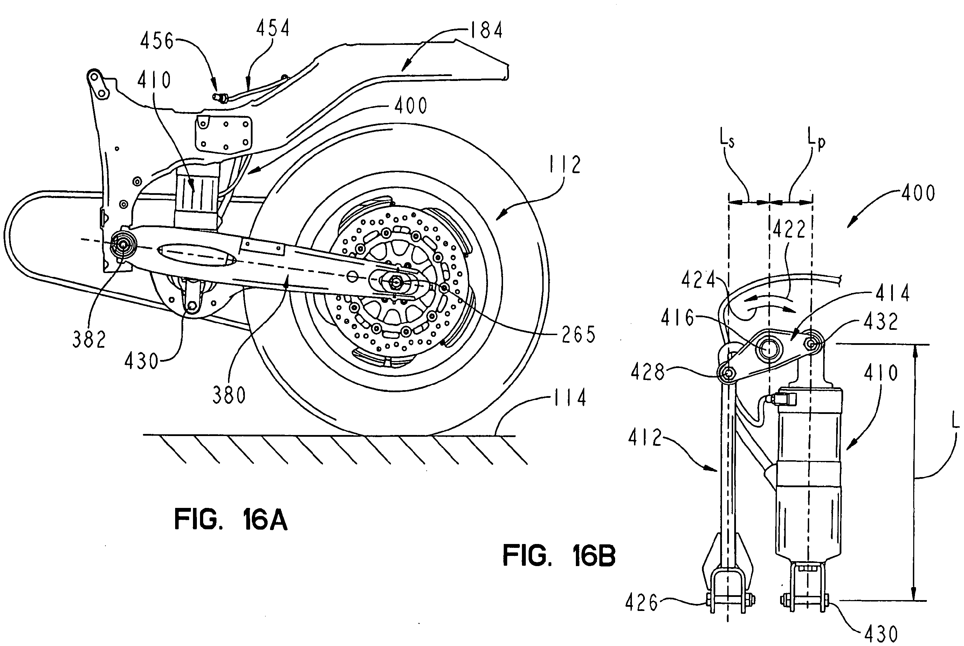

As shown in Fig. 16A, rear suspension 400 is arranged such that pushrod 412 and connecting link 414 move in a plane which is not parallel to the centerline plane 116 of vehicle 100. In the illustrated embodiment, pushrod 412 and connecting link 414 move in a plane which is perpendicular to the centerline plane 116 of the vehicle 100. In one embodiment, pushrod 412 and connecting link 414 move in multiple planes, each of which is not parallel to the centerline plane.

Referring to Figs. 16-19, the operation of rear suspension 400 is described. As described herein, rear suspension 400 exhibits a generally constant motion ratio through the travel range of rear suspension 400. In one embodiment, rear suspension 400 is arranged so that pushrod 412 and connecting link 414 move in a plane which is not parallel to the centerline plane 116 of vehicle 100, but the motion ratio of rear suspension 400 is one of either a linear rising rate through the travel range of rear suspension 400 or a generally linear falling rate through the travel range of rear suspension 400. In one embodiment, rear suspension 400 is arranged so that pushrod 412 and connecting link 414 move in a plane which is parallel to the centerline plane 116 of vehicle 100 and the motion ratio of rear suspension 400 is generally constant through the travel range of rear suspension 400.

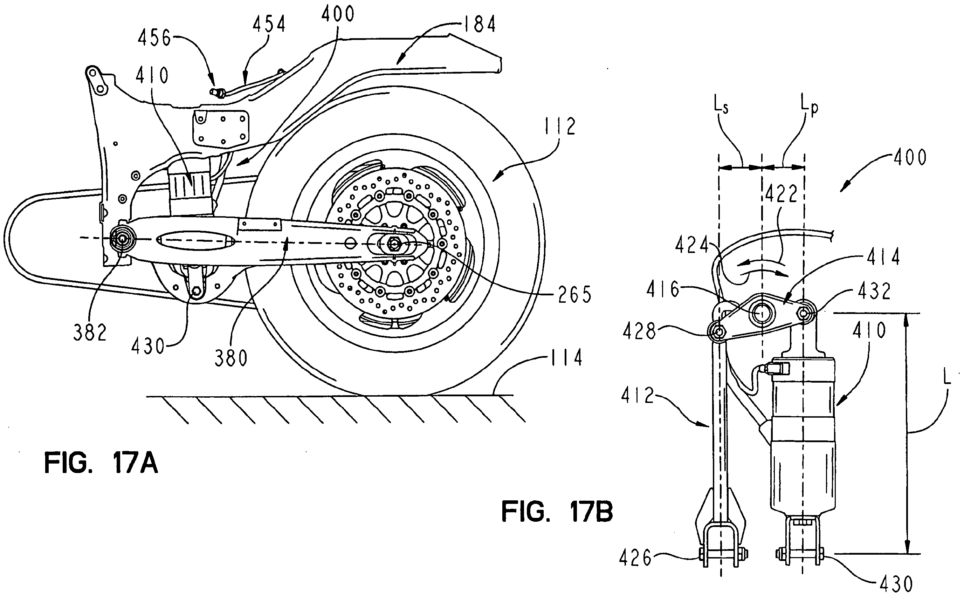

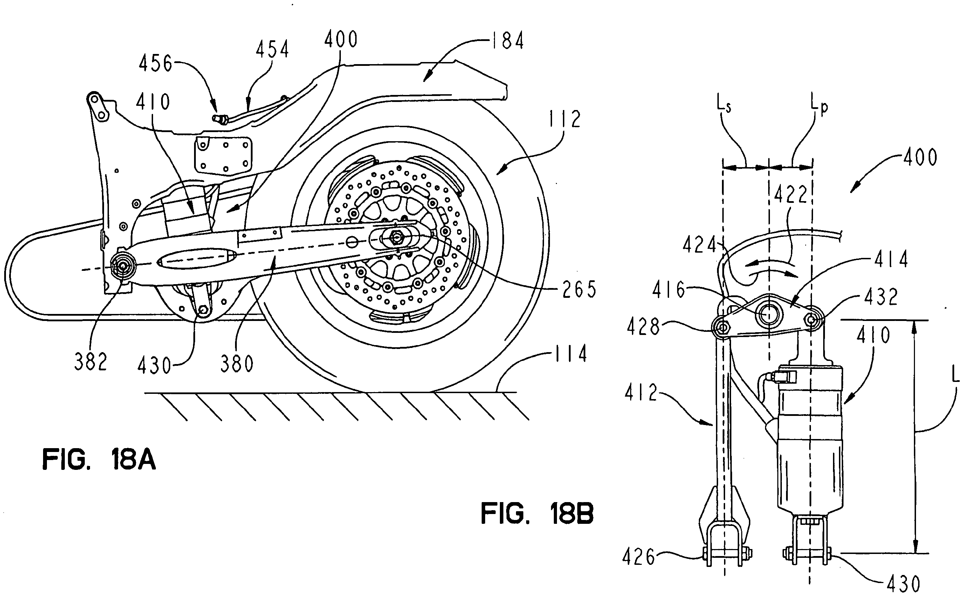

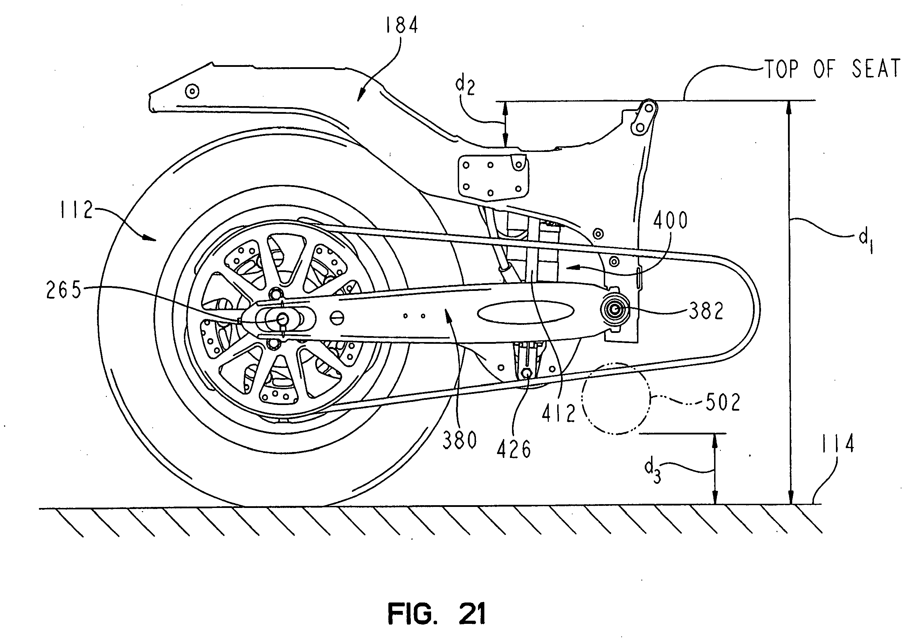

Fig. 16A illustrates a side view of rear frame member 184, swing arm 380, rear wheel 112, and rear suspension 400 when rear suspension 400 is in an extended state. Fig. 16B illustrates rear suspension 400 when in the extended state of Fig. 16A. Fig. 17A illustrates a side view of rear frame member 184, swing arm 380, rear wheel 112, and rear suspension 400 when rear suspension 400 is in a mid-travel state. Fig. 17B illustrates rear suspension 400 when in the mid-travel state of Fig. 17A. Fig. 18A illustrates a side view of rear frame member 184, swing arm 380, rear wheel 112, and rear suspension 400 when rear suspension 400 is in a compressed state. Fig. 18B illustrates rear suspension 400 when in the compressed state of Fig. 18A. In one embodiment, rear suspension 400 has about 5 inches (about 12.7 centimeters) of rear suspension travel and a seat height ($d_1$ in Fig. 21) of up to about 26.5 inches (about 67.31 centimeters).

In the extended state shown in Fig. 16B, a length (L) of shock absorber 410 is extended. The upper coupler 432 connecting shock absorber 410 and connecting link 414 is generally higher than the upper coupler 428 connecting pushrod 412 and connecting link 414. Connecting link 414 is rotated from horizontal in direction 422. The extended state corresponds to a state wherein vehicle 100 is not supporting an operator, passenger, or cargo.

In the mid-travel state shown in Fig. 17B, due to the upward movement of swing arm 380 shock absorber 410 is compressed thereby reducing a length (L) of shock absorber 410 compared to the extended state. In one embodiment, a lower portion of shock absorber 410 moves upward with swing arm 380 and an upper portion of shock absorber 410 moves downward due to the rotation of connecting link 414. This may be due to the addition of an operator or cargo. The upper coupler 432 connecting shock absorber 410 and connecting link 414 is lower compared to the extended state and the upper coupler 428 connecting pushrod 412 and connecting link 414 is higher compared to the extended state. Connecting link 414 is rotated in direction 424 relative to the extended state.

In the compressed state shown in Fig. 18B, a length (L) of shock absorber 410 is reduced compared to the mid-travel state. This may be due to the addition of both an operator and cargo and/or the further addition of a passenger. The upper coupler 432 connecting shock absorber 410 and connecting link 414 is lower compared to the mid-travel state and the upper coupler 428 connecting pushrod 412 and connecting link 414 is higher compared to the mid-travel state. Connecting link 414 is rotated in direction 424 relative to the mid-travel state.

As mentioned herein, rear suspension 400 has a generally constant overall motion ratio (MR) through the suspension travel. Motion ratio is the rear axle 265 displacement divided by the shock absorber 410 displacement.

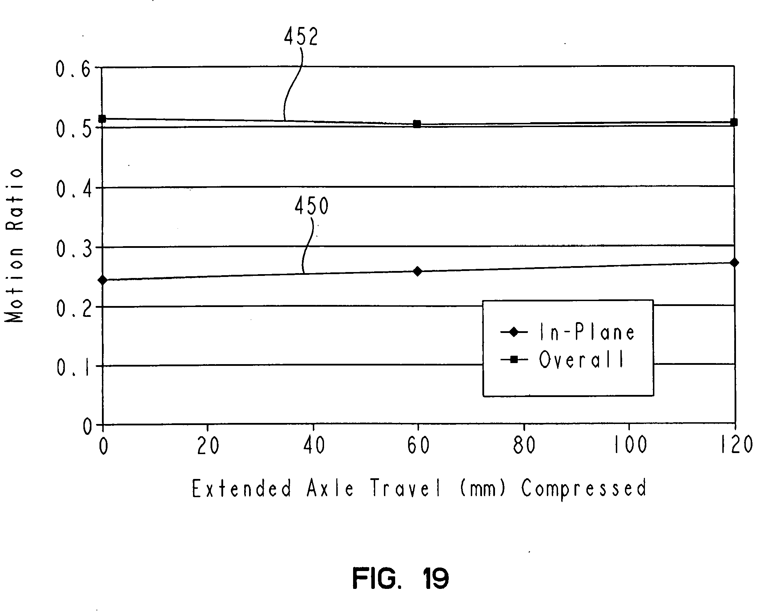

Referring to Fig. 19, as represented by line 450 when considering only the movement from a side view (Figs. 16A, 17A, 18A) which is in-plane with the centerline plane 116 of vehicle 100 the motion ratio of rear suspension 400 is progressive or increasing with the extent of the travel. The motion ratio when considering only the in-plane movement may be calculated as the ratio of the length of the lever arm causing the linkage of rear suspension 400 to move (the horizontal distance from the pivot of the swing arm 380 with rear frame member 184 to rear axle 265) and the length of the lever arm that the linkage works through (the perpendicular distance from the pivot of the swing arm 380 with rear frame member 184 to the pivot of the shock absorber and the swingarm). In one embodiment, the motion ratio from the side view increases about 10.3% as the swingarm moves upward.

In contrast, the movement of the linkage, pushrod 412 and connecting link 414, is arranged in one embodiment to achieve a regressive motion ratio of about 26%. When combined with the progressive nature of the shock absorber 410 and the progressive in-plane motion ratio, a generally constant motion ratio is achieved. The geometry of the connecting link 414 and the placement of the pivot points (couplers 428, 432) dictate the motion ratio of the linkage. In one embodiment, the pivot locations of couplers 428, 430 are designed to give an overall generally constant motion ratio which is less than about 1.5. In the illustrated embodiment, the pivot locations of couplers 428, 430 are designed to give an overall linkage motion ratio of approximately 0.5, and to ensure that this motion ratio is constant through the suspension travel range. The overall motion ratio of rear suspension 400 is represented by line 452 in Fig. 19.

The calculation of the overall motion ratio may be carried out as follows. The motion ratio (MR) may be found from equation 1

$$MR = \frac{Dshock}{Daxle} \qquad (1)$$

wherein MR = Motion ratio; Dshock = Displacement (change in length) of shock absorber 410; and Daxle = Displacement of rear axle 265.

The displacement of the shock absorber 410 may be found from equation 2

$$Dshock = Dtop + Dbottom \qquad (2)$$

wherein Dtop = Displacement of top of shock absorber 410 relative to the motorcycle chassis 180 and Dbottom = Displacement of the bottom of the shock absorber 410 relative to the motorcycle chassis 180. Dbottom may also be expressed as

$$Dbottom = Daxle\frac{Llinkage}{Lswingarm} \qquad (3)$$

wherein Llinkage = The perpendicular distance between the swingarm pivot and the shock absorber axis and Lswingarm = the perpendicular distance between the swingarm pivot and the centerline of the rear axle. Dtop may also be expressed as

$$Dtop = Dbottom\left(\frac{Ls}{Lp}\right) = Daxle\left(\frac{Llinkage}{Lswingarm}\right)\left(\frac{Ls}{Lp}\right) \qquad (4)$$

wherein Ls = Perpendicular distance between the shock absorber axis and the pivot of connecting link 414 and Lp = Perpendicular distance between the pushrod axis and the pivot of connecting link 414.

Substituting equations 3 and 4 into equation 2, Dshock may be expressed as

$$Dshock = Daxle\left(\frac{Llinkage}{Lswingarm}\right) + Daxle\left(\frac{Llinkage}{Lswingarm}\right)\left(\frac{Ls}{Lp}\right) \quad (5a)$$

$$Dshock = Daxle\left(\frac{Llinkage}{Lswingarm}\right)\left(1+\frac{Ls}{Lp}\right) \qquad (5b)$$

Further, as stated in equation 1, MR is the ratio of Dshock to Daxle. Therefore, MR may be expressed as

$$\frac{Dshock}{Daxle} = \left(\frac{Llinkage}{Lswingarm}\right)\left(1+\frac{Ls}{Lp}\right) \qquad (6a)$$

$$MR = \left(\frac{Llinkage}{Lswingarm}\right)\left(1+\frac{Ls}{Lp}\right) \qquad (6b)$$

The graph in Fig. 19 may be generated based on equations 1-6. Again, line 450 represents the progressive nature of the in-plane portion of the motion ratio that would be seen if there was no connecting link 414 or pushrod 412, and the shock absorber 410 was connected to swing arm 380 at the bottom and chassis 180 at the top. Line 452 represents the overall motion ratio and shows the effect of the added linkage components on the overall motion ratio. As can be seen on the graph in Fig. 19, the in-plane linkage is progressive, but the overall motion ratio is constant through the travel range. In one embodiment, the generally constant motion ratio is a desirable characteristic for good ride comfort.

In one embodiment, two shock absorbers are used in place of rear suspension 400. Each shock absorber is connected to swing arm 380 and rear frame member 184.

Referring to Fig. 21, the configuration of rear suspension 400, permits the seat height location of vehicle 100 to be lowered. As shown in Fig. 21, a top surface of seat 102 in an area corresponding to where the operator would be seated is a distance $d_1$ from ground 114. The distance $d_1$ also takes into account a depth $d_2$ of padding positioned below the seat surface to cushion the ride of the operator. Exemplary padding includes foam. In one embodiment, the distance $d_1$ is about 26.5 inches (about 67.31 centimeters) and the distance $d_2$ is about 4.0 inches (about 10.16 centimeters) while maintaining a ground clearance $d_3$ of about 5 inches (about 12.7 centimeters) with the operator of about 180 pounds on vehicle 100 and no cargo. In one embodiment, the operator seat has a height above a lower portion of the location 502 of up to about 21.5 inches (about 54.61 cm) ($d_1$ - $d_3$).

The configuration of rear suspension 400 also permits enough clearance to permit the exhaust system 500 to cross underneath swing arm 380 at a location 502. In one embodiment, the exhaust system 500 extends rearward from engine 124 towards rear wheel 112 passing in front of rear wheel 112 from a first side of vehicle 100 to a second side of vehicle 100 at a height lower than pivot axle 382.

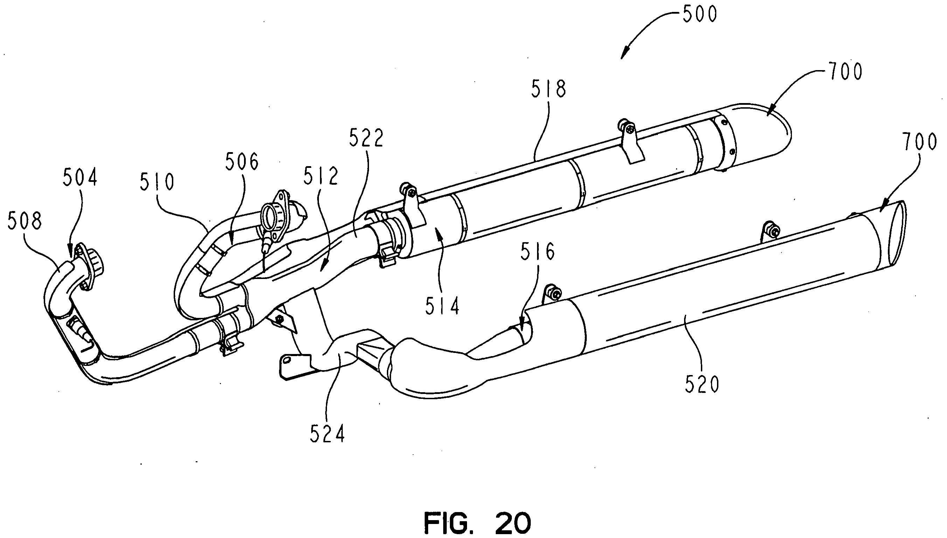

Referring to Fig. 20, exhaust system 500 is shown. Exhaust system 500 includes a front headpipe 504 which connects to a front cylinder of engine 124 and a rear headpipe 506 which connects to a rear cylinder of engine 124. Each of front headpipe 504 and rear headpipe 506 has a respective weld-shield 508, 510 which covers an exterior of the respective headpipe 504, 506. Headpipes 504 and 506 are each connected to a cross-over section 512. Cross-over section 512 is connected to a right side muffler 514 and a left side muffler 516. Right side muffler 514 and a left side muffler 516 are each covered by a respective weld-shield 518, 520. Exhaust from engine 124 is communicated to headpipes 504 and 506 which in turn communicate the exhaust to cross-over section 512. Cross-over section 512 then communicates the exhaust to right side muffler 514 and left side muffler 516 which are in fluid communication with the atmosphere.

Cross-over section 512 includes a first section 522 which is connected to right side muffler 514 and a second section 524 which is connected to left side muffler 516. Right side muffler 514 is located on a right side of rear wheel 112. Left side muffler 516 is located on a left side of rear wheel 112. Second section 524 passes under swing arm 380 through location 502.

In one embodiment, vehicle 100 includes a tip-over system 600 which prevents an unwanted tip-over of vehicle 100 from a generally vertical position. In various situations, two-wheeled vehicles may tip over when left unattended or when being walked by an operator. This results in unwanted damage to various components, such as mirrors and body panels.

Referring to Fig. 4, tip-over apparatus 600 includes a left rear tip-over apparatus 602, a left front tip-over apparatus 604, a right rear tip-over apparatus 606, and a right front tip-over apparatus 608. Right front tip-over apparatus 608 is a mirror image of left front tip-over apparatus 604. Right rear tip-over apparatus 606 is a mirror image of left rear tip-over apparatus 602.

In one embodiment, vehicle 100 may be supported by either right front tip-over apparatus 608 and right rear tip-over apparatus 606 or left front tip-over apparatus 604 and left rear tip-over apparatus 602 when tipped from vertical to either the right side or the left side, respectively. Right front tip-over apparatus 608 and right rear tip-over apparatus 606 and left front tip-over apparatus 604 and left rear tip-over apparatus 602 are designed to support vehicle 100 when full of fuel and carrying about 65 pounds (about 29.48 kilograms) of cargo. The presence of right front tip-over apparatus 608 and right rear tip-over apparatus 606 and left front tip-over apparatus 604 and left rear tip-over apparatus 602 also prevent vehicle 100 from falling over on a leg of the operator pinning the operator under vehicle 100.

Referring to Fig. 2, left front tip-over apparatus 604 is located forward of footrest 610. Left front tip-over apparatus 604 is supported by chassis 180.

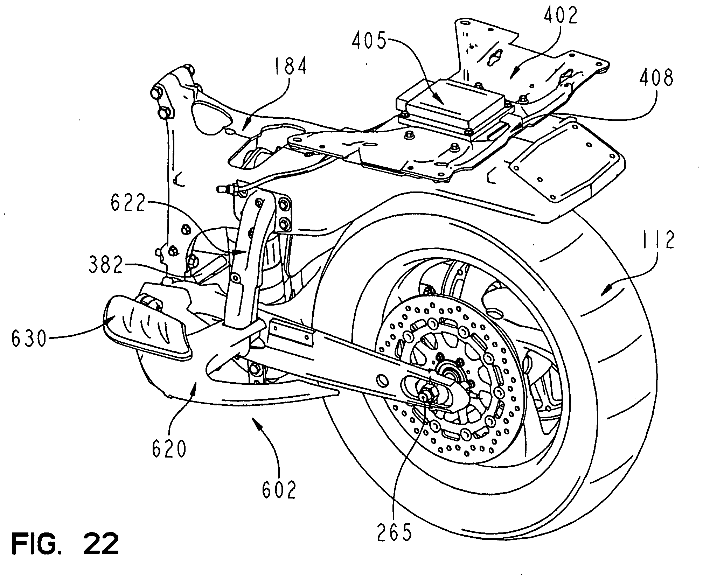

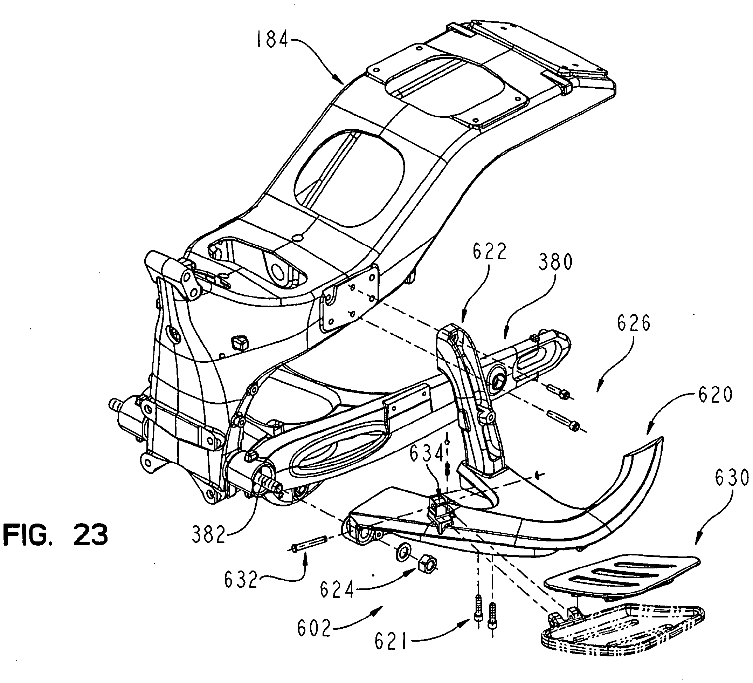

Referring to Figs. 22 and 23, left rear tip-over apparatus 602 is shown. Referring to Fig. 23 left rear tip-over apparatus 602 includes a generally horizontally extending wing 620 and a generally vertically extending support member 622 coupled to the horizontally extending wing 620 through couplers 621.

The horizontally extending wing 620 is coupled to the swing arm pivot shaft 382. Swing arm pivot shaft 382 includes a threaded end section which cooperates with a fastener 624 to couple the horizontally extending wing 620 to the remainder of vehicle 100. The vertically extending support member 622 is coupled to rear frame member 184 with couplers 626. Left rear tip-over apparatus 602 is fixed to rear frame member 184 and does not move along with swing arm 380.

The horizontally extending wing 620 also serves as a support for a second set of footrests 630 which may be used by a passenger of vehicle 100. Footrests 630 are rotatably coupled to horizontally extending wing 620 through a coupler 632 which is received by a mounting feature 634 of horizontally extending wing 620.

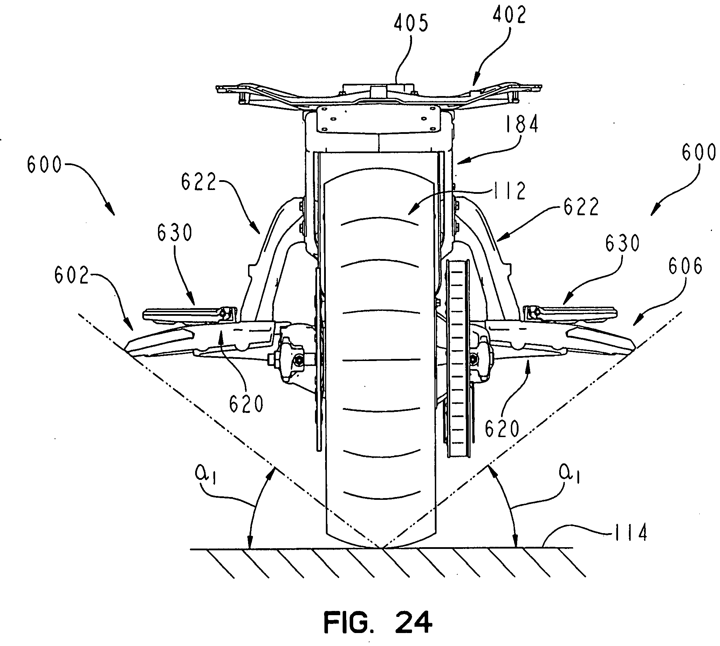

Referring to Fig. 24, tip-over system 600 permits vehicle 100 to tip to the left or right up to an angle $a_1$ relative to ground 114. At angle $a_1$ the front fairing 132 and saddlebags 176 and 178 are not in contact with ground 114 or any other components of vehicle 100 except for front wheel 110, rear wheel 112, and tip over system 600. In one embodiment, angle $a_1$ is about 46°.

Referring to Fig. 6, front frame member 182 includes a handle 680. Handle 680 is part of the casting of front frame member 182. Handle 680 may be used to secure vehicle 100 during transport. In one embodiment, a rope or other tie-down member is secured to or through an opening 682 of handle 680 to secure vehicle 100 for transport. Handle 680 is positioned in front of fork journal 200. Therefore, the tie down location for vehicle 100 is positioned in front of the steering axis of vehicle 100 and above fender 266.

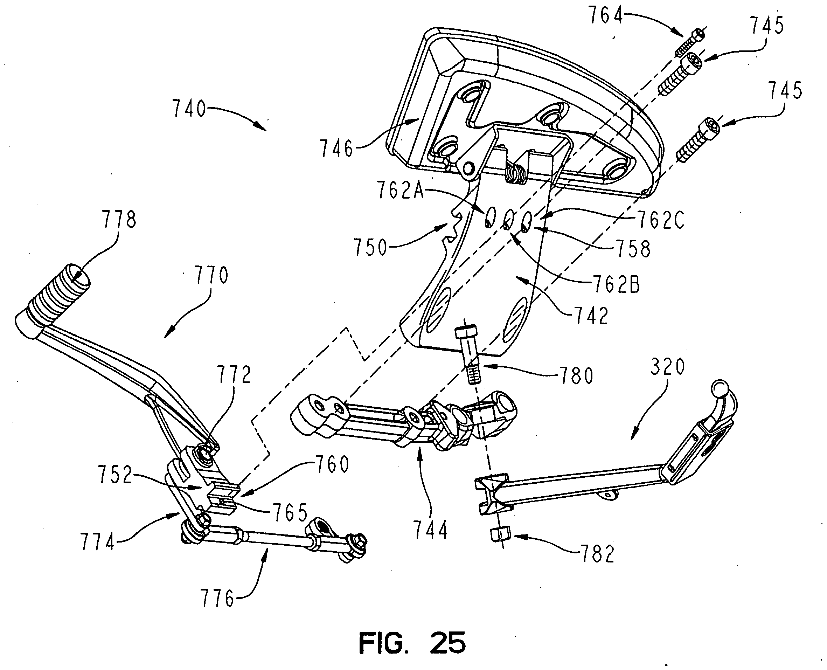

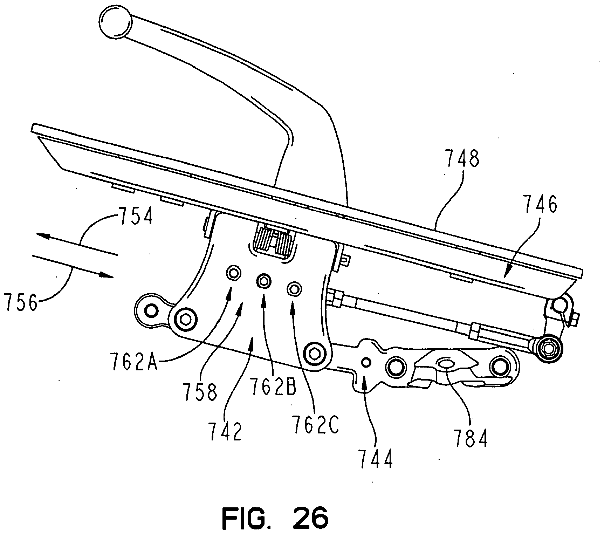

Referring to Figs. 25 and 26, a foot control assembly 740 is shown. As is known in the art, foot controls are used to control various functions of a two wheeled vehicle, such as braking and shifting. Foot control assembly 740 provides an adjustable foot control that may be positioned according to the size the operator.

Foot control assembly 740 includes a support 742 which mounts to a frame member 744 through couplers 745. Frame member 744 is in turn supported by front frame member 182 through additional frame members. Support 742 supports a foot rest 746 having an upper surface 748 upon which a foot of an operator may be positioned. In the illustrative embodiment, foot rest 746 is rotationally coupled to support 742.

Support 742 further includes a channel 750 which receives a mount 752. Mount 752 and channel 750 have complementary shapes. Mount 752 is slidably received in channel 750 and is constrained to move along a first linear axis in directions 754 and 756. Directions 754 and 756, in one embodiment, are parallel to an upper surface 748 of foot rest 746, as shown in Fig. 26.

Support 742 and mount 752 each have a respective positioning system 758, 760 which is used to constrain the location of mount 752 relative to support 742 in directions 754 and 756. In the illustrated embodiment, support 742 includes a plurality of apertures 762A-C for positioning system 758 and mount 752 includes an aperture 764 for positioning system 760. Each of apertures 762A-C and aperture 764 are sized to receive a threaded bolt 764 which couples mount 752 to support 742. Threaded bolt 764 engages threads provided in aperture 765 of mount 752. Other positioning systems are also contemplated, such as detents, clamps, and other suitable positioning systems.

Apertures 762A-C are equally spaced along support 742 in a line and provide predetermined adjustment intervals that mount 752 may be moved to (and subsequently secured) along directions 754 and 756. In one embodiment, at least two apertures 762 are provided. In one embodiment, apertures 762A-C are replaced with an elongated slot which provides more freedom in locating mount 752 along directions 754, 756 with respect to support 742.

A foot control lever 770 is rotatably coupled to mount 752 through a pivot pin 772. Pivot pin 772 is further coupled to a first link 774 which is rotatably coupled to a second link 776. Second link 776 is coupled to another component of vehicle 100 to be controlled by control lever 770. Exemplary other components include the transmission and the brakes.

Foot control lever 770 is coupled to a foot peg 778. In operation, an operator rests their foot on upper surface 748 of foot rest 746. Then the operator moves his foot to actuate foot peg 778 either upwardly or downwardly. This, in turn, causes foot control lever 770 to rotate relative to pivot 772 which also causes first link 774 to rotate relative to pivot pin 772. The rotation of first link 774 further causes the movement of second link 776 in one of directions 754, 756.

The location of foot peg 778 may be adjusted along directions 754, 756 by moving mount 752 along channel 750 of support 742. This permits the location of foot control peg 778 to be adjusted to better match the leg length and foot size of the operator.

As also shown in Fig. 25, side stand 320 is coupled to frame member 744 through a coupler, illustratively a bolt 780 and nut 782. Side stand 320 is rotatably coupled to frame member 744. Bolt 780 is received in an opening 784 of frame member 744.

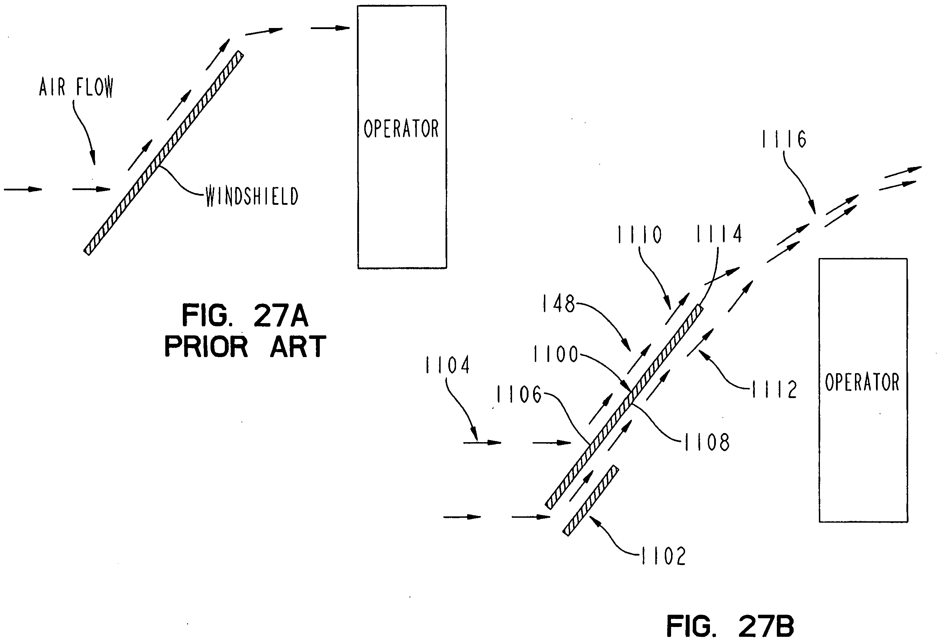

Vehicle 100 includes a windshield 148 which directs air flow away from an operator. Referring to Fig. 27A, in prior art vehicles a flow of air strikes a front surface of a windshield and travels up the windshield due to the tilt of the windshield and the movement of the vehicle. The air flow will once clearing the top portion of the windshield travel on and strike the operator, such as in the face. This may adversely affect the operator.

Referring to Fig. 27B, windshield 148 includes a front windshield member 1100 and a back windshield member 1102. In one embodiment, front windshield member 1100 is made from a generally transparent material, such as glass or plastic. A flow of air 1104 encounters windshield 148 and a first portion 1110 of the air 1104 travels up generally along a front surface 1106 of front windshield member 1100. A second portion 1112 of the air 1104 passes between front windshield member 1100 and rear windshield member 1102 and travels generally up along a back surface 1108 of front windshield member 1100. Once at a top portion 1114 of front windshield member 1100, the first portion 1110 of air 1104 interacts with the second portion 1112 of air 1104. The upward movement of second portion 1112 forces the recombined air flow 1116 to remain generally moving with an upward slope until air flow 1116 clears the operator.

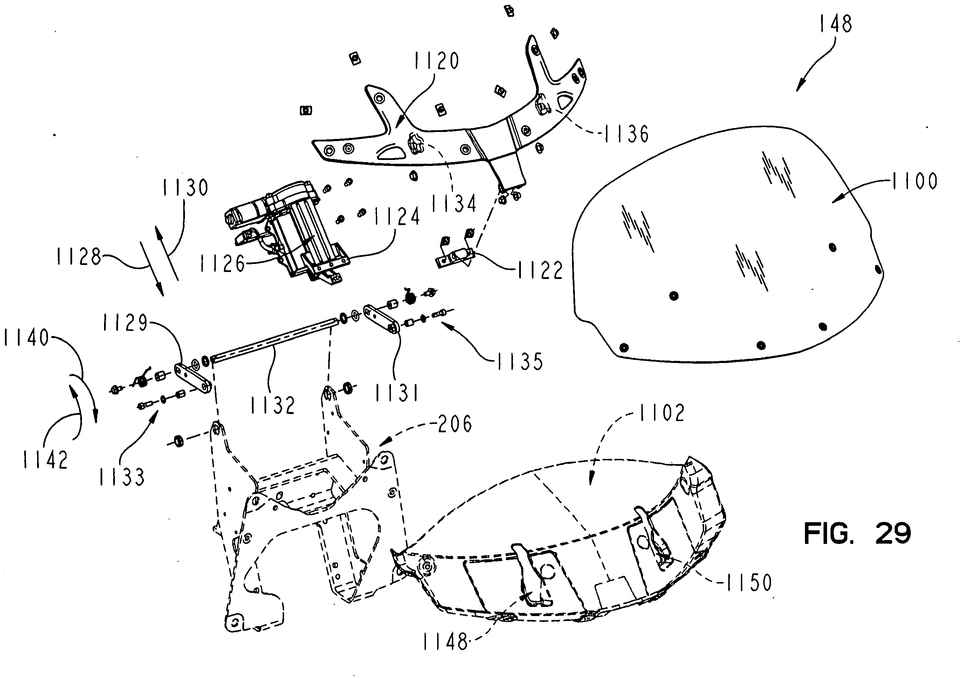

Referring to Fig. 29, front windshield member 1100 is mounted to a support bracket 1120. Support bracket 1120 is rotatably coupled to a mount 1122 which is coupled to a sled 1124 of a linear actuator 1126. Linear actuator 1126 includes a motor which rotates a threaded rod which engages sled 1124 to move sled 1124 in directions 1128 and 1130. Linear actuator 1126 is supported by mounting bracket 206 and is held stationary except for sled 1124. In one embodiment, linear actuator 1126 is available from Asahi Denso located at 1126 Nakajo, Hamamatsu City, Shizuoka, 438-0043 Japan.

Support bracket 1120 is also rotatably coupled to a pair of links 1129 and 1131 which are coupled to a support rod 1132. Links 1129 and 1131 are rotatably coupled to support bracket 1120 through couplers 1133 and 1135 which are received by apertures 1134 and 1136 of support bracket 1120. Support rod 1132 rotates relative to mounting bracket 206 in directions 1140 and 1142. Bias members 1144 and 1146, illustratively springs, interact with mounting bracket 206 and links 1129 and 1131, respectively, to bias support rod 1132 in direction 1140.

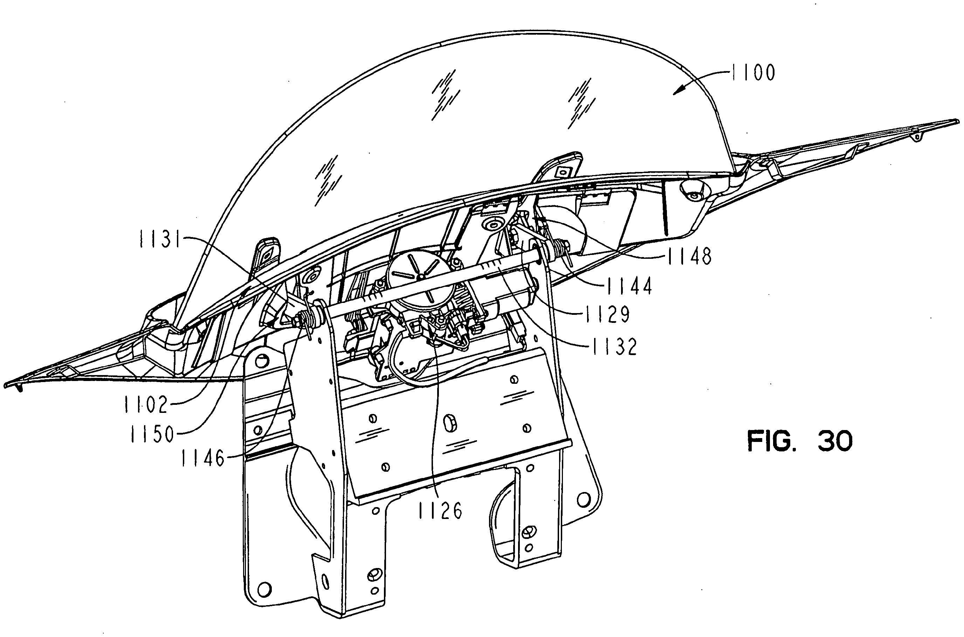

Second windshield member 1102 is coupled to mounting bracket 206. Links 1129 and 1131 extend through openings 1148 and 1150 of second windshield member 1102, respectively, as shown in Fig. 30.

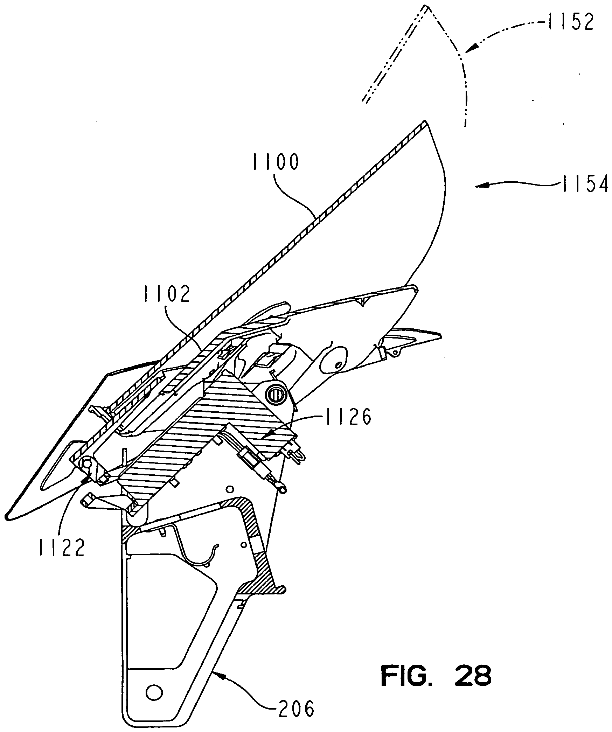

Second windshield member 1102 remains stationary relative to mounting bracket 206. First windshield member 1100 is movable relative to second windshield member 1102 generally in directions 1128 and 1130 between a raised position 1152 (shown in phantom in Fig. 28) and a lowered position 1154 (see Fig. 28). As shown in Fig. 48, first windshield member 1100 is tilted at a first angle from vertical in the lowered position 1154 and a second angle from vertical in the raised position 1152, the second angle being less than the first angle. Further, a position of a top edge of the first windshield member 1100 being vertically aligned when the first windshield member 1100 is in the raised position and the when the first windshield member 1100 is in the lowered position.

Illustratively, from lowered position 1154 an input is received by linear actuator 1126 from an input actuated by the operator. In one embodiment, the input is a toggle switch provided on the handlebars. The motor of linear actuator 1126 moves sled 1124 in direction 1130. This causes support bracket 1122 to also move in direction 1130 resulting in links 1129 and 1131 to rotate in direction 1142. As support bracket 1122 is moved in direction 1130, first windshield member 1100 is also moved in direction 1130.

Referring to Fig. 28, in one embodiment, first windshield member 1100 and second windshield member 1102 are parallel to each other in the lowered position 1154 and spaced apart to provide airflow between first windshield member 1100 and second windshield member 1102. In one embodiment, first windshield member 1100 and second windshield member 1102 are titled relative to front face 204 of mounting bracket 206 at an angle of 45 degrees in the lowered position 1154. In the raised position 1152, first windshield member 1100 and second windshield member 1102 are further spaced apart to permit a higher amount of airflow between first windshield member 1100 and second windshield member 1102. First windshield member also tips upward due to rotation of links 1129 and 1131. This results in windshield member 1100 when in the raised position 1152 not being parallel with windshield member 1102 as it is in the lowered position 1154.

In one embodiment, the amount of airflow in the raised position 1152 is sufficient to cause airflow 1116 to be directed as shown in Fig. 27B. This assists in protecting the operator from the weather. The amount of airflow in the lowered position 1154 is not sufficient to cause airflow 1116 to be directed as shown in Fig. 27B. Rather, airflow 1116 is directed towards the operator and provides cooling to the operator.

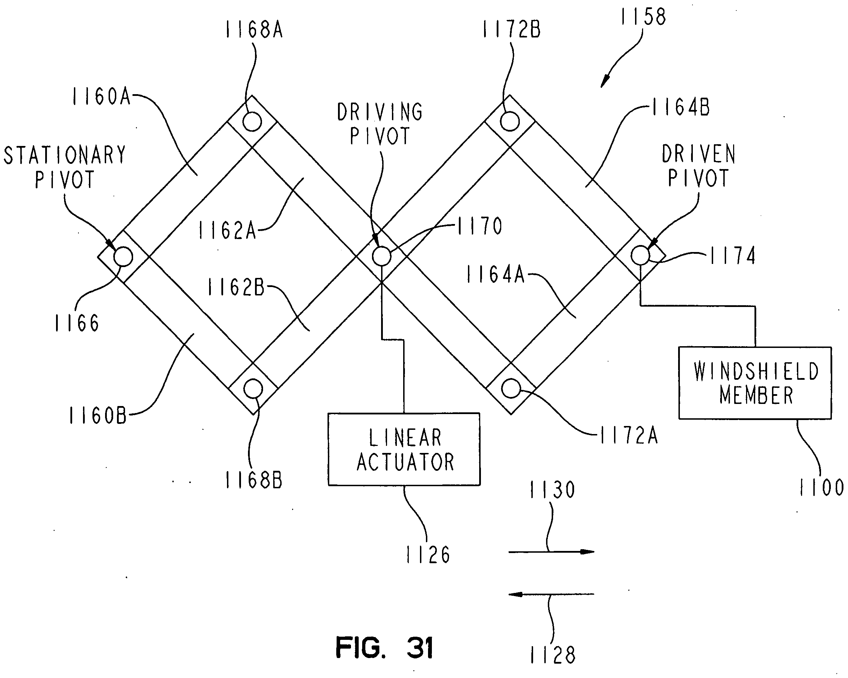

Referring to Fig. 31, in one embodiment, a scissor linkage 1158 is implemented to connect windshield member 1100 to linear actuator 1126. As shown in Fig. 31, three pairs of links 1160A-B, 1162A-B, and 1164A-B form two diamond shapes. Links 1160A-B are rotatably coupled together at a first pivot 1166. Links 1160A-B are rotatably coupled to links 1162A-B, respectively, at pivots 1168A-B. Links 1162A-B are rotatably coupled together at pivot 1170. Links 1162A-B are rotatably coupled to links 1164A-B, respectively, at pivots 1172A-B. Links 1164A-B are rotatably coupled together at pivot 1174.

As shown in Fig. 31, pivot 1166 is held stationary. Pivot 1170 is coupled to linear actuator 1126 and moves in directions 1128 and 1130. Pivot 1174 is coupled to windshield member 1100 and moves in directions 1128 and 1130 in response to the movement of pivot 1170. Scissor linkage 1158 provides a multiplication factor to the movement of pivot 1170. Based on the length of links 1160A-B, 1162A-B, and 1164A-B, the displacement of pivot 1174 in direction 1130 may be greater than the displacement of pivot 1170 in direction 1130. This permits windshield member 1100 to have a greater range of travel. In one embodiment, the ratio of the movement of pivot 1170 to the movement of pivot 1174 is greater than 1:2. In one embodiment, the ration of the movement of pivot 1170 to the movement of pivot 1174 is greater than 1:3. In one embodiment, the ratio of the movement of pivot 1170 to the movement of pivot 1174 is about 1:3.4125. In one embodiment, windshield 1100 has about 203 mm of travel.

While this invention has been described as having an exemplary design, the present invention may be further modified within the scope of this disclosure as defined in the appended claims. This application is therefore intended to cover any variations, uses, or adaptations of the invention using its general principles. Further, this application is intended to cover such departures from the present disclosure as come within known or customary practice in the art to which this invention pertains.

### Claims

**1.** A two-wheeled vehicle (100), comprising a front wheel (110), a rear wheel (112) generally positioned in line with the front wheel along a longitudinal plane of the two-wheeled vehicle, and a frame (180) supported by the front wheel and the rear wheel; an engine (124) coupled to the frame and operably coupled to the rear wheel to power the rear wheel; a steering assembly (130) coupled to the front wheel, the steering assembly being moveable to steer the front wheel; and a plurality of fuel storage tanks (272, 274) supported by the frame and operably coupled to the engine, the plurality of fuel storage tanks including a first fuel storage tank (272) and a second fuel storage tank (274) positioned forward of the rear wheel and in a generally side-by-side configuration, the first fuel storage tank (272) being positioned to a first lateral side of the longitudinal plane of the two-wheeled vehicle and the second fuel storage tank (274) being positioned to the second lateral side of the longitudinal plane of the two-wheeled vehicle, **characterized in that** an interior of the first fuel storage tank and an interior of the second fuel storage tank are in fluid communication with each other through a first fluid conduit (312) connecting in fluid communication a lower portion of the interior of the first fuel storage tank and a lower portion of the interior of the second fuel storage tank and a second fluid conduit (310) connecting in fluid communication an upper portion of the interior of the first fuel storage tank and an upper portion of the interior of the second fuel storage tank to level the fuel between the first and second fuel storage tanks, and the two-wheeled vehicle (100) further comprises a side stand (320) coupled to the frame, wherein the two-wheeled vehicle is configured to lean towards the second lateral side of the longitudinal plane of the two-wheeled vehicle when the two-wheeled vehicle is positioned in a parked configuration with the side stand supporting the two-wheeled vehicle and wherein the first fuel storage tank includes a fuel inlet to which a fuel cap (322) is removably coupled.

**2.** The two-wheeled vehicle of claim 1, **characterized in that** one of the first fuel storage tank and the second fuel storage tank is in fluid communication with a fuel line (314) which is in fluid communication with the engine.

**3.** The two-wheeled vehicle of claim 2, further **characterized by** a fuel pump (316) which is connected to the fuel line (314) and positioned in the one of the first fuel storage tank (272) and second fuel storage tank (274) which is in fluid communication with the fuel line (314).

### Patentansprüche

**1.** Zweirädriges Fahrzeug (100), umfassend ein Vorderrad (110), ein Hinterrad (112), das im Allgemeinen entlang einer Längsebene des zweirädrigen Fahrzeugs mit dem Vorderrad ausgerichtet positioniert ist, und einen Rahmen (180), der durch das Vorderrad und das Hinterrad getragen wird; einen Motor (124), der mit dem Rahmen gekoppelt ist und funktionell mit dem Hinterrad gekoppelt ist, um das Hinterrad anzutreiben; eine Lenkungsgruppe (130), die mit dem Vorderrad gekoppelt ist, wobei die Lenkungsgruppe bewegt werden kann, um das Vorderrad zu lenken; und eine Mehrzahl von Kraftstoffvorratsbehältern (272, 274), die durch den Rahmen getragen werden und funktionell mit dem Motor gekoppelt sind, wobei die Mehrzahl von Kraftstoffvorratsbehältern einen ersten Kraftstoffvorratsbehälter (272) und einen zweiten Kraftstoffvorratsbehälter (274) umfasst, die vorwärts vom Hinterrad und im Allgemeinen in einer Nebeneinanderkonfiguration positioniert sind, wobei der erste Kraftstoffvorratsbehälter (272) an einer ersten lateralen Seite der Längsebene des zweirädrigen Fahrzeugs positioniert ist, und der zweite Kraftstoffvorratsbehälter (274) an der zweiten lateralen Seite der Längsebene des zweirädrigen Fahrzeugs positioniert ist, **dadurch gekennzeichnet, dass** ein Innenraum des ersten Kraftstoffvorratsbehälters und ein Innenraum des zweiten Kraftstoffvorratsbehälters durch einen ersten Flüssigkeitskanal (312), der einen unteren Abschnitt des Innenraums des ersten Kraftstoffvorratsbehälters und einen unteren Abschnitt des Innenraums des zweiten Kraftstoffvorratsbehälters in Flüssigkeitsverbindung verbindet, und einen zweiten Flüssigkeitskanal (310), der einen oberen Abschnitt des Innenraums des ersten Kraftstoffvorratsbehälters und einen oberen Abschnitt des Innenraums des zweiten Kraftstoffvorratsbehälters in Flüssigkeitsverbindung verbindet, miteinander in Flüssigkeitsverbindung stehen, um den Kraftstoff zwischen den ersten und zweiten Kraftstoffvorratsbehältern auszugleichen, und das zweirädrige Fahrzeug (100) ferner einen Seitenständer (320) umfasst, der mit dem Rahmen gekoppelt ist, wobei das zweirädrige Fahrzeug so konfiguriert ist, dass es sich in Richtung der zweiten lateralen Seite der Längsebene des zweirädrigen Fahrzeugs neigt, wenn das zweirädrige Fahrzeug in einer geparkten Konfiguration positioniert ist, wobei der Seitenständer das zweirädrige Fahrzeug stützt, und wobei der erste Kraftstoffvorratsbehälter einen Kraftstoffeinlass umfasst, mit dem ein Kraftstoffdeckel (322) abnehmbar gekoppelt ist.

2. Zweirädriges Fahrzeug nach Anspruch 1, **dadurch gekennzeichnet, dass** einer von dem ersten Kraftstoffvorratsbehälter und dem zweiten Kraftstoffvorratsbehälter mit einer Kraftstoffleitung (314) in Flüssigkeitsverbindung steht, die mit dem Motor in Flüssigkeitsverbindung steht.

3. Zweirädriges Fahrzeug nach Anspruch 2, ferner **gekennzeichnet durch** eine Kraftstoffpumpe (316), die mit der Kraftstoffleitung (314) verbunden und in dem einen des ersten Kraftstoffvorratsbehälters (272) und des zweiten Kraftstoffvorratsbehälter (274) positioniert ist, der mit der Kraftstoffleitung (314) in Flüssigkeitsverbindung steht.

**Revendications**

1. Véhicule à deux roues (100), comprenant une roue avant (110), une roue arrière (112) généralement alignée avec la roue avant le long d'un plan longitudinal du véhicule à deux roues, et un châssis (180) supporté par la roue avant et la roue arrière ; un moteur (124) couplé au châssis et couplé de manière opérationnelle à la roue arrière pour actionner la roue arrière ; un ensemble de direction (130) couplé à la roue avant, l'ensemble de direction étant mobile pour diriger la roue avant ; et une pluralité de réservoirs de stockage de carburant (272, 274) supportés par le châssis et couplés de manière opérationnelle au moteur, la pluralité de réservoirs de stockage de carburant comprenant un premier réservoir de stockage de carburant (272) et un deuxième réservoir de stockage de carburant (274) positionnés devant la roue arrière et selon une configuration généralement côte à côte, le premier réservoir de stockage de carburant (272) étant positionné sur un premier côté latéral du plan longitudinal du véhicule à deux roues et le deuxième réservoir de stockage de carburant (274) étant positionné sur le deuxième côté latéral du plan longitudinal du véhicule à deux roues, **caractérisé en ce qu'**un intérieur du premier réservoir de stockage de carburant et un intérieur du deuxième réservoir de stockage de carburant sont en communication de fluide entre eux par le biais d'un premier conduit de fluide (312) raccordant en communication de fluide, une partie inférieure de l'intérieur du premier réservoir de stockage de carburant et une partie inférieure de l'intérieur du deuxième réservoir de stockage de carburant et un deuxième conduit de fluide (310) raccordant, en communication de fluide, une partie supérieure de l'intérieur du premier réservoir de stockage de carburant et une partie supérieure de l'intérieur du deuxième réservoir de stockage de carburant pour mettre à niveau le carburant entre les premier et deuxième réservoirs de stockage de carburant, et le véhicule à deux roues (100) comprend en outre une béquille latérale (320) couplée au châssis, dans lequel le véhicule à deux roues est configuré pour se pencher vers le deuxième côté latéral du plan longitudinal du véhicule à deux roues lorsque le véhicule à deux roues est positionné dans une configuration stationnée avec la béquille latérale qui supporte le véhicule à deux roues, et dans lequel le premier réservoir de stockage de carburant comprend une entrée de carburant à laquelle un capuchon de carburant (322) est couplé de manière amovible.

2. Véhicule à deux roues selon la revendication 1, **caractérisé en ce que** l'un parmi le premier réservoir de stockage de carburant et le deuxième réservoir de stockage de carburant est en communication de fluide avec une conduite de carburant (314) qui est en communication de fluide avec le moteur.

3. Véhicule à deux roues selon la revendication 2, **caractérisé en outre par** une pompe de carburant (316) qui est raccordée à la conduite de carburant (314) et positionnée dans l'un parmi le premier réservoir de stockage de carburant (272) et le deuxième réservoir de stockage de carburant (274) qui est en communication de fluide avec la conduite de carburant (314).

FIG. 1

FIG. 2

EP 2 104 626 B1

FIG. 3

FIG. 4

EP 2 104 626 B1

FIG. 5

**FIG. 6**

FIG. 7

FIG. 8

FIG. 9

EP 2 104 626 B1

FIG. 10

FIG. 11

FIG. 12

FIG. 13

FIG. 13A

FIG. 14

FIG. 15

EP 2 104 626 B1

**FIG. 16A**

**FIG. 16B**

EP 2 104 626 B1

FIG. 17B

FIG. 17A

FIG. 18A

FIG. 18B

FIG. 19

EP 2 104 626 B1

**FIG. 20**

EP 2 104 626 B1

FIG. 21

FIG. 22

FIG. 23

**FIG. 24**

EP 2 104 626 B1

FIG. 25

EP 2 104 626 B1

FIG. 26

EP 2 104 626 B1

**FIG. 27A**
**PRIOR ART**

AIR FLOW

WINDSHIELD

OPERATOR

**FIG. 27B**

1116

1110  1114

148

1100

1104

1106

1112

1108

OPERATOR

1102

EP 2 104 626 B1

FIG. 28

FIG. 29

FIG. 30

FIG. 31

**EP 2 104 626 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 19436 A
- DE 1118632
- JP 59106380 B
- FR 1111887
- US 4799569 A

### Non-patent literature cited in the description

- **NAKAJO.** Hamamatsu City. Shizuoka, 438-0043